(19) Europäisches Patentamt
European Patent Office
Office européen des brevets

(11) **EP 4 783 717 A1**

(12) **EUROPEAN PATENT APPLICATION**
published in accordance with Art. 153(4) EPC

(43) Date of publication:
29.07.2026 Bulletin 2026/31

(21) Application number: 24867432.7

(22) Date of filing: 18.09.2024

(51) International Patent Classification (IPC):
*H04W 74/08* (2024.01)

(52) Cooperative Patent Classification (CPC):
H04L 1/08; H04W 56/00; H04W 74/00;
H04W 74/08; H04W 74/0833

(86) International application number:
PCT/CN2024/119354

(87) International publication number:
WO 2025/061024 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 CN 202311214381
25.10.2023 CN 202311395595

(71) Applicant: Vivo Mobile Communication Co., Ltd.
Dongguan, Guangdong 523863 (CN)

(72) Inventors:
• WANG, Chengrui
Dongguan, Guangdong 523863 (CN)
• LIN, Zhipeng
Dongguan, Guangdong 523863 (CN)

(74) Representative: Conti, Marco
Bugnion S.p.A.
Via di Corticella, 87
40128 Bologna (IT)

(54) **PRACH RETRANSMISSION METHOD AND APPARATUS, AND DEVICE AND READABLE STORAGE MEDIUM**

(57) This application pertains to the field of communication technologies, and specifically relates to a PRACH repetition transmission method and apparatus, a device, and a readable storage medium. The method includes: determining, by a terminal, a time offset; determining, by the terminal, a target RO group based on the time offset; and performing, by the terminal, PRACH repetition transmission on the target RO group, where the time offset is obtained by counting time-domain consecutive valid ROs that are at a same frequency location, that are associated with a same SSB, and on which preamble sets associated with the SSB are the same; or the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

FIG. 2

## Description

### CROSS-REFERENCE TO RELATED APPLICATIONS

This application claims priority to Chinese Patent Application No. 202311214381.9, filed in China on September 19, 2023, and claims priority to Chinese Patent Application No. 202311395595.0, filed in China on October 25, 2023, which are incorporated herein by reference in their entireties.

### TECHNICAL FIELD

This application pertains to the field of communication technologies, and specifically relates to a PRACH repetition transmission method and apparatus, a device, and a readable storage medium.

### BACKGROUND

In a physical random access channel (Physical Random Access Channel, PRACH) repetition transmission technology, a purpose of introducing a time offset (time offset) between adjacent physical random access channel transmission occasion groups (PRACH transmission Occasion group or PRACH Occasion group, RO group for short) is to reduce a quantity of physical random access channel transmission occasions (PRACH transmission Occasion or PRACH Occasion, RO) detected by a network side, so as to alleviate pressure of a receiver in PRACH detection.

However, preamble (Preamble) sets associated with a same synchronization signal/physical broadcast channel block (SS/PBCH block, SSB) on different ROs may be different. According to a current time offset rule, some ROs are unavailable for an SSB and do not need to be detected, but for another SSB associated with the ROs, the ROs are available and need to be detected. This conflicts with the purpose of introducing the time offset. In addition, when preamble sets associated with a same SSB on different ROs are different, whether these ROs are counted in the time offset is currently unspecified. This causes different RO group determining results on the network side and a terminal side. Consequently, inconsistent RO groups are used at a transmit end and a receive end, causing a failure in PRACH repetition reception.

### SUMMARY

Embodiments of this application provide a PRACH repetition transmission method and apparatus, a device, and a readable storage medium, which can resolve a problem that PRACH repetition reception fails because a time offset rule introduced in a related PRACH repetition transmission method is not clear.

According to a first aspect, a PRACH repetition transmission method is provided, including:

determining, by a terminal, a time offset time offset; determining, by the terminal, a target physical random access channel transmission occasion group RO group based on the time offset; and

performing, by the terminal, physical random access channel PRACH repetition transmission on the target RO group, where

the time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

According to a second aspect, a PRACH repetition transmission method is provided, including:

determining, by a network-side device, a time offset; determining, by the network-side device, all available RO groups based on the time offset; and

performing, by the network-side device, PRACH repetition reception on all the available RO groups, where

the time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

According to a third aspect, a PRACH repetition transmission apparatus is provided, including:

a first determining module, configured to determine, by a terminal, a time offset;
a second determining module, configured to determine, by the terminal, a target RO group based on the time offset; and
a transmission module, configured to perform, by the terminal, PRACH repetition transmission on the target RO group, where
the time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

According to a fourth aspect, a PRACH repetition transmission apparatus is provided, including:

a third determining module, configured to determine, by a network-side device, a time offset;
a fourth determining module, configured to determine, by the network-side device, all available RO groups based on the time offset; and
a receiving module, configured to perform, by the network-side device, PRACH repetition reception on all the available RO groups, where
the time offset is obtained by counting time-domain consecutive valid ROs that are at a same frequency location, that are associated with a same SSB, and on which preamble sets associated with the SSB are the same; or
the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

According to a fifth aspect, a terminal is provided, where the terminal includes a processor and a memory, the memory stores a program or instructions capable of running on the processor, and the program or the instructions are executed by the processor to implement the steps of the method according to the first aspect.
According to a sixth aspect, a terminal is provided, including a processor and a communication interface. The processor is configured to: determine, by the terminal, a time offset time offset; and determining, by the terminal, a target physical random access channel transmission occasion group RO group based on the time offset. The communication interface is configured to perform, by the terminal, physical random access channel PRACH repetition transmission on the target RO group. The time offset is obtained by counting time-domain consecutive valid ROs that are at a same frequency location, that are associated with a same SSB, and on which preamble sets associated with the SSB are the same; or the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.
According to a seventh aspect, a network-side device is provided, where the network-side device includes a processor and a memory, the memory stores a program or instructions capable of running on the processor, and the program or the instructions are executed by the processor to implement the steps of the method according to the first aspect.
According to an eighth aspect, a network-side device is provided, including a processor and a communication interface. The processor is configured to: determine, by the network-side device, a time offset; and determine, by the network-side device, all available RO groups based on the time offset. The communication interface is configured to perform, by the network-side device, PRACH repetition reception on all the available RO groups. The time offset is obtained by counting time-domain consecutive valid ROs that are at a same frequency location, that are associated with a same SSB, and on which preamble sets associated with the SSB are the same; or the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.
According to a ninth aspect, a readable storage medium is provided. The readable storage medium stores a program or instructions, and the program or the instructions are executed by a processor to implement the steps of the method according to the first aspect or the steps of the method according to the second aspect.
According to a tenth aspect, a wireless communication system is provided, including a terminal and a network-side device. The terminal may be configured to perform the steps of the method according to the first aspect, and the network-side device may be configured to perform the steps of the method according to the second aspect.
According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored in a storage medium, and the program/program product is executed by at least one processor to implement the method according to the first aspect or the method according to the second aspect.

In the embodiments of this application, a new time offset determining rule is set: The time offset is obtained by counting time-domain consecutive valid ROs that are at a same frequency location, that are associated with a same SSB, and on which preamble sets associated with the SSB are the same; or the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission. In a process of determining the time offset, an impact of the preamble set associated with the SSB on the RO is also considered, so that it is more accurately determined whether the RO associated with the SSB is available and needs to be detected. In this way, the terminal and the network-side device have a consistent understanding of an RO group used for PRACH repetition transmission, thereby improving performance of PRACH repetition transmission. In addition, in the embodiments of this application, performance of PRACH repetition transmission is improved, and pressure of PRACH detection on the network side is alleviated.

**BRIEF DESCRIPTION OF DRAWINGS**

FIG. 1a is a block diagram of a wireless communication system to which an embodiment of this application is applicable;
FIG. 1b is a schematic diagram of an association relationship between an SSB and an RO;
FIG. 1c is a schematic diagram of another association relationship between an SSB and an RO;
FIG. 1d is a schematic diagram of a manner of determining an RO group;
FIG. 1e is a schematic diagram of another manner of determining an RO group;
FIG. 1f is a schematic diagram of a manner of determining an RO group for different SSBs;
FIG. 2 is a first schematic flowchart of a PRACH repetition transmission method according to an embodiment of this application;
FIG. 3 is a second schematic flowchart of a PRACH repetition transmission method according to an embodiment of this application;

FIG. 4a is a first schematic diagram of an embodiment according to an embodiment of this application;
FIG. 4b is a first schematic diagram of an embodiment according to an embodiment of this application;
FIG. 4c is a first schematic diagram of an embodiment according to an embodiment of this application;
FIG. 4d is a first schematic diagram of an embodiment according to an embodiment of this application;
FIG. 5 is a first schematic diagram of a structure of a PRACH repetition transmission apparatus according to an embodiment of this application;
FIG. 6 is a second schematic diagram of a structure of a PRACH repetition transmission apparatus according to an embodiment of this application;
FIG. 7 is a schematic diagram of a structure of a communication device according to an embodiment of this application;
FIG. 8 is a schematic diagram of a structure of a terminal according to an embodiment of this application;
FIG. 9 is a first schematic diagram of a structure of a network-side device according to an embodiment of this application; and
FIG. 10 is a second schematic diagram of a structure of a network-side device according to an embodiment of this application.

**DESCRIPTION OF EMBODIMENTS**

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

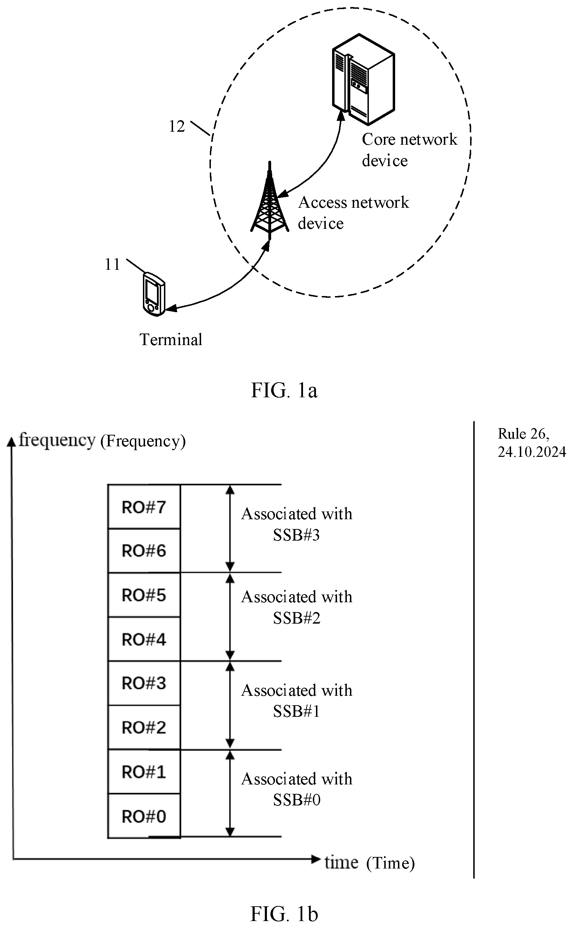

FIG. 1a is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, and the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the art. The base station is not limited to a specific technical term, provided that the same technical effect is achieved. It should be noted that in embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, only a core network device in the NR system is used as an example for description, and a specific type of the core network device is not limited.

To better understand the technical solutions of this application, the following content is first described:

Random access procedure

The random access procedure includes a contention-based random access procedure and a contention-free random access procedure.

In a contention-based 4-step random access procedure (Random Access Channel, RACH), a user equipment (User Equipment, UE) first transmits a Msg1 (including a preamble (Preamble)) to a network on a time-frequency radio resource, namely, a RACH occasion resource (RO resource). After detecting a preamble, the network transmits a Msg2/random access response (Random Access Response, RAR) (random access response) message, including a number of the preamble detected by the network and an uplink radio resource allocated to the UE to transmit a Msg3. After receiving the Msg2, if the UE confirms that at least one of the number that is of the preamble and that is carried in the Msg2 is consistent with a number of the preamble transmitted by the UE, the UE transmits, based on the resource indicated in the RAR, the Msg3 that includes contention resolution information. After receiving the Msg3, the network transmits a Msg4 that includes contention resolution information. The UE receives the Msg4, and confirms that the contention resolution information is consistent with that transmitted by the UE in the Msg3, thereby completing 4-step random access.

The network includes uplink (Uplink, UL) grant (grant) information in the RAR to indicate scheduling information of a Msg3 physical uplink shared channel (Physical Uplink Shared Channel, PUSCH), and includes, therein, information such as RAPID (RACH preamble ID), a temporary cell-radio network temporary identity (Temporary Cell-Radio Network Temporary Identity, TC-RNTI), and a tracking area (Tracking Area, TA). If the network does not receive the Msg3 PUSCH, retransmission of the Msg3 PUSCH may be scheduled on a physical downlink control channel (Physical downlink control channel, PDCCH) scrambled by using the TC-RNTI.

For the contention-based random access procedure, different UEs randomly select preambles for transmission. In this case, different UEs may select a same preamble for transmission on a same time-frequency radio resource (RO resource). This case may be understood as a preamble conflict between UEs. In this case, different UEs receive a same RAR, and at this point, different UEs transmit the Msg3 PUSCH based on the scheduling information in the RAR UL grant. Because a related technology does not support repetition transmission of the Msg3 PUSCH, the network can decode, on one Msg3 PUSCH scheduling resource, a PUSCH (including contention resolution information) transmitted by only one UE. Therefore, the network includes, in the Msg4, the contention resolution information received in the Msg3. If the contention resolution information in the Msg4 received by the UE matches the contention resolution information transmitted by the UE in the Msg3 PUSCH, the UE considers that contention resolution succeeds. If the contention resolution information in the Msg4 received by the UE does not match the contention resolution information transmitted by the UE in the Msg3 PUSCH, the UE considers that contention resolution fails.

If contention resolution fails, the terminal reselects a resource for PRACH transmission, and makes a next random access attempt.

Selection of a random access resource

In NR, a cell may configure, at one time domain location for PRACH transmission, a plurality of frequency division multiplexed (Frequency Division Multiplexed, FDM) physical random access channel transmission occasions (PRACH transmission occasion, or referred to as a physical random access channel occasion (PRACH Occasion)), which is simply referred to as an RO herein for brevity. At a moment, a quantity of ROs on which FDM can be performed may be: {1, 2, 4, 8}, which is determined by using a higher-layer parameter msg1-FDM. As shown in FIG. 1b, at a moment, eight RO resources are distributed at different frequencies.

A random access preamble (Preamble) can be transmitted only on a time domain resource (namely, an RO resource) configured by using a parameter PRACHConfigurationIndex, the random access preamble can be transmitted only on a frequency domain resource configured by using a parameter msg1-FDM, and a PRACH frequency domain resource is $n\_RA \in \{0, 1, ..., M-1\}$, where M is equal to the higher-layer parameter msg1-FDM. During initial access, the PRACH frequency domain resource $n\_RA$ is numbered in ascending order starting from an RO resource with a lowest frequency within an initial active uplink bandwidth part (initial active uplink bandwidth part). Otherwise, the PRACH frequency domain resource $n\_RA$ is numbered in ascending order starting from an RO resource with a lowest frequency within an active uplink bandwidth part (active uplink bandwidth part). As shown in FIG. 1b, the RO resources are sequentially numbered RO#0~RO#7 in ascending order of frequencies.

In NR, there is an association relationship between an RO and an actually transmitted synchronization signal/physical broadcast channel block (SS/PBCH block, SSB). An SSB may be associated with a plurality of ROs, or a plurality of SSBs may be associated with one RO (in this case, different SSBs correspond to different preamble codes). This is configured by the network by using a parameter ssb-perRACH-OccasionAndCB-PreamblesPerSSB.

Generally, a base station may transmit different SSBs by using different beams. A quantity of SSBs is configured by using a parameter ssb-PositionsInBurst. For FR2 (Frequency range 2), a maximum quantity of SSBs is 64. A corresponding UE transmits a preamble on an RO associated with an SSB. In this way, the UE selects, based on strength of a received downlink beam/SSB, an RO/"RO and preamble combination" associated with an SSB whose signal quality is good, to transmit the Msg1. In this way, the network may determine, based on the RO/"RO and preamble combination" of the received preamble, the SSB selected by the UE, and transmit the Msg2 on a downlink beam corresponding to the SSB, to ensure received quality of a downlink signal.

FIG. 1b is used as an example. A quantity of FDMed ROs at a moment is 8, and a quantity of actually transmitted SSBs is 4, namely, SSB#0, SSB#1, SSB#2, and SSB#3. Each SSB is associated with two ROs. If the UE determines to transmit a PRACH/Msg1/preamble on ROs corresponding to SSB#0, the UE selects one RO from RO#0 and RO#1 to transmit the PRACH.

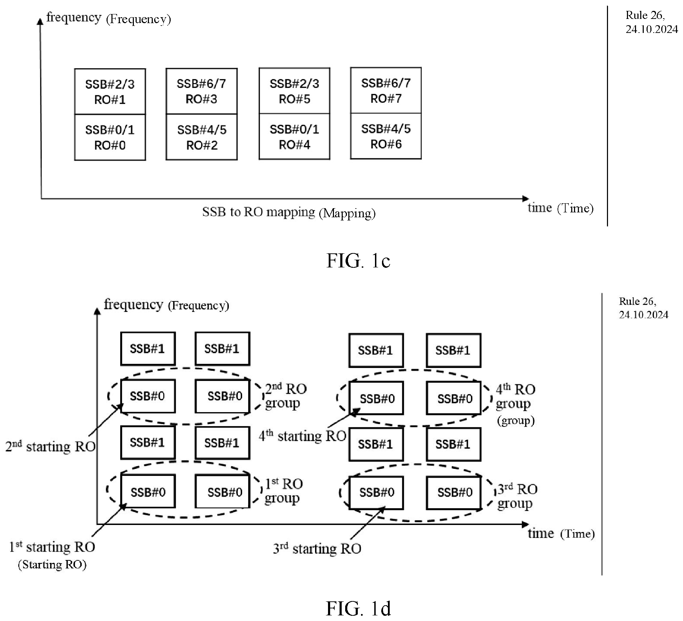

FIG. 1c is used as an example. A quantity of FDMed ROs at a moment is 2, and a quantity of actually transmitted SSBs is 8, namely, SSB#0, SSB#1, ..., SSB#7. Every two SSBs are associated with one RO. When a plurality of SSBs share one RO, preamble sets associated with the plurality of SSBs are different, that is, a same preamble cannot belong to preamble sets associated with different SSBs. RO#0 in FIG. 1c is used as an example, which have 60 preambles associated with SSBs, where preambles indexed 0~29 are associated with SSB#0, and preambles indexed 30~59 are associated with SSB#1.

It should be noted that each square in FIG. 1b and FIG. 1c represents an RO, not an SSB, and an SSB marked within the square indicates which SSB is associated with this RO.

Before transmitting the PRACH, the UE first performs resource selection. The UE first selects, based on reference signal received power (Reference Signal Received Power, RSRP) of a received beam (beam) or SSB, an SSB whose RSRP is greater than a threshold. If there are a plurality of SSBs whose RSRP is greater than the threshold, the terminal may select any SSB whose RSRP is greater than the threshold. When there is no SSB whose RSRP is greater than the threshold, the UE selects an SSB based on implementation.

Based on a network (Network, NW) configuration, the UE obtains a correspondence between an SSB and an RO. After an SSB is selected, an RO corresponding to the selected SSB is used as an RO for transmitting the PRACH/preamble. If the selected SSB is associated with a plurality of ROs, the terminal may select one of the ROs to transmit the PRACH/preamble.

For example, in the example shown in FIG. 1b, it is assumed that the UE selects SSB#1. The UE may select one of RO#2 and RO#3 to transmit the PRACH/preamble. In the example shown in FIG. 1c, if the UE selects SSB#1, the UE may select, from ROs (RO#0 or RO#4) associated with SSB#1, an available RO closest to a current time, to transmit the PRACH/preamble.

In the selected RO, the UE selects one preamble from a preamble set associated with the selected SSB, to transmit the PRACH. As shown in FIG. 1c, if one RO is associated with two SSBs, preambles in available preamble sets associated with SSBs in one RO are divided into two subsets, and each subset corresponds to one SSB. The UE selects a preamble sequence in a preamble subset corresponding to the selected SSB to transmit the PRACH.

PRACH repetition random access resource selection

For PRACH repetition, the UE needs to repeatedly transmit a preamble on a plurality of ROs that are at different time domain locations and that are associated with a same SSB. A PRACH repetition number may be {2, 4, 8}. After determining the PRACH repetition number, the UE needs to determine an RO group (RO group), where a quantity of valid ROs in the RO group is equal to the PRACH repetition number.

It is assumed that the PRACH repetition number is N1, and an overall RO group determining rule within a time window X is as follows: First, a starting RO of the first RO group is determined, and then remaining N-1 ROs of the first RO group are determined. Next, starting ROs and remaining ROs of other RO groups are sequentially determined. The remaining N1-1 ROs of each RO group are ROs that are associated with a same SSB, are at a same frequency location, and are associated with a same preamble set as the starting RO. After the first RO group is determined, determining of a remaining RO group is related to whether a time offset (time offset) is configured. A purpose of introducing the time offset is to reduce a quantity of ROs detected by the network side to alleviate pressure.

If the time offset is not configured, for each SSB, the first valid RO within the time window X is used as the starting (starting) RO of the first RO group, and the first RO group is determined based on the starting RO. Then, a starting RO of a subsequent RO group is determined within the time window X from another RO other than the RO in the determined RO group first in ascending order of frequency domain locations and then in ascending order of time domain locations, and the subsequent RO group is further determined. For example, in FIG. 1d, it is assumed that the PRACH repetition number is 2. For SSB#0, the RO group shown in FIG. 1d may be determined.

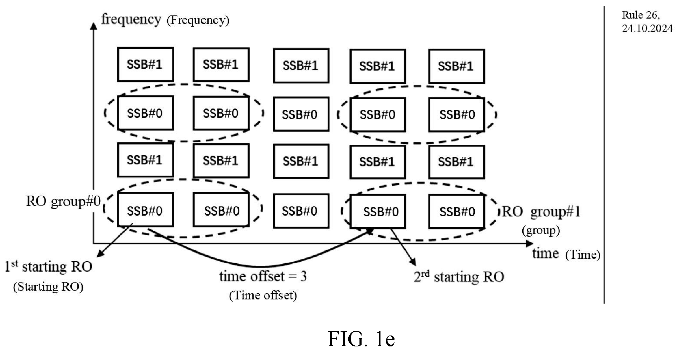

If the time offset is configured, for each SSB, the first valid RO found within the time window X first in ascending order of frequency domain and then in ascending order of time domain, and is used as the starting RO of the first RO group, and then the first RO group is determined based on the starting RO. Then, a starting RO of a subsequent RO group and a corresponding RO group are determined from another RO other than the RO in the determined RO group first in ascending order of frequency domain and then in ascending order of time domain. A starting RO of an nth RO group that is at a same frequency location and that is associated with a same SSB is an RO that is at a distance of the time offset from a starting RO of an (n-1)th RO group. The time offset is defined as a quantity of time-domain valid ROs associated with a same SSB. For example, in FIG. 1e, it is assumed that the PRACH repetition number is 2, and the time offset=3. For SSB#0, the RO group shown in FIG. 1e may be determined.

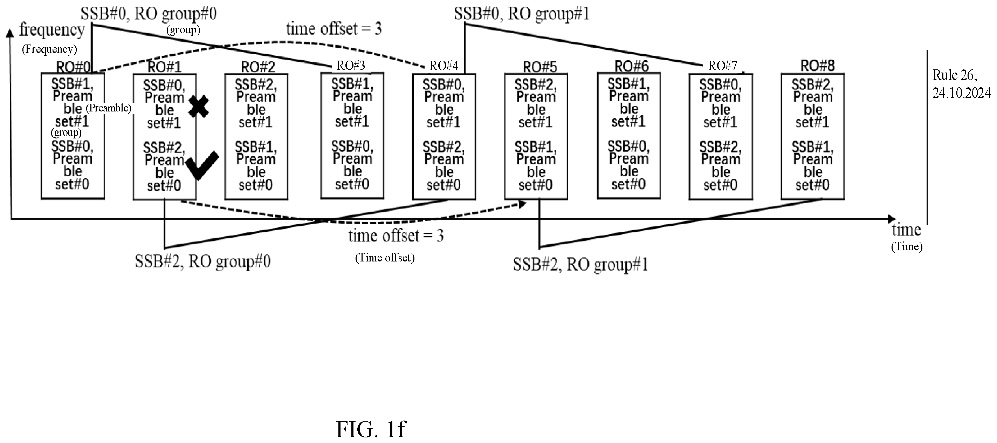

The purpose of introducing the time offset between adjacent RO groups is to reduce the quantity of ROs detected by the network side to alleviate pressure of a receiver in PRACH detection. The time offset is currently defined as a quantity of time-domain valid ROs that are at same frequency domain location and that are associated with a same SSB. However, preamble sets associated with a same SSB on different ROs may be different. According to a current time offset rule, some ROs are unavailable for an SSB and do not need to be detected, but for another SSB associated with the ROs, the ROs are available and need to be detected. This conflicts with the purpose of introducing the time offset. For example, as shown in FIG. 1f below, if the time offset=3 and the PRACH repetition number is 2, RO#1 is unavailable for SSB#0 but available for SSB#2.

For ROs associated with a same SSB, when preamble sets associated with the SSB are different across the ROs, it is not known whether the ROs are all considered in the RO offset. This may causes different understandings between the network side and the terminal side. Consequently, inconsistent RO groups are used at a transmit end and a receive end, causing a failure in PRACH repetition reception. In FIG. 1f, it is assumed that all ROs associated with an SSB are counted in the time offset. However, it is also possible that ROs that are associated with a same SSB but on which the SSB is associated with different preamble sets are not considered in the time offset.

A value of the time offset is not determined at present. Various repetition numbers need to be considered comprehensively.

Therefore, when preamble sets associated with an SSB on different ROs are different, how the time offset is determined and how the RO group is determined need to be resolved.

In addition, based on a current RO group determining method, when the time offset is configured, for a same SSB, after the first RO group is determined within the time window X, a starting RO of a subsequent RO group is determined from another RO other than an RO in a previous RO group first in frequency-domain order (from a low frequency to a high frequency) and then in time-domain order and in combination with the time offset (it may be understood that determining of the second RO group requires removing an RO related to the first RO group, and determining of the third RO group requires removing the RO related to the first RO group and an RO related to the second RO group, that is, a same RO group cannot belong to two RO groups). In a process of determining the starting RO of the subsequent RO group, a specific rule is not provided for when determining is performed first in frequency-domain order and then in time-domain order, and when determining is performed in combination with the time offset.

With reference to the accompanying drawings, the following describes in detail the PRACH repetition transmission method provided in the embodiments of this application by using some embodiments and application scenarios thereof.

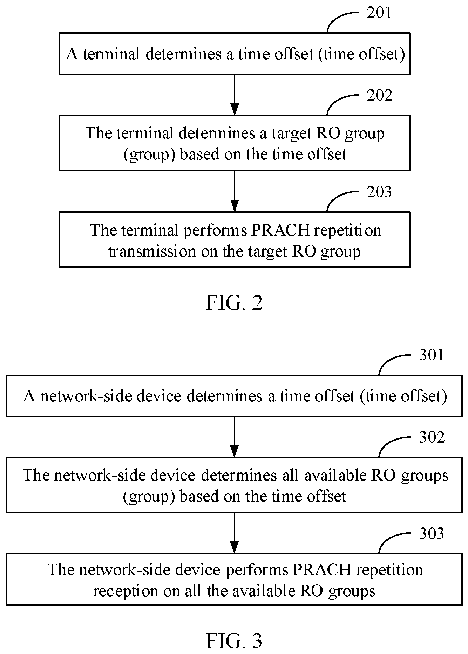

Referring to FIG. 2, an embodiment of this application provides a PRACH repetition transmission method. The method may also be referred to as a preamble repetition-based PRACH transmission method. The method is performed by a terminal, and the method includes the following steps:

    Step 201: The terminal determines a time offset.
    Step 202: The terminal determines a target RO group based on the time offset.
    Step 203: The terminal performs PRACH repetition transmission on the target RO group.

In this embodiment of this application, a time offset determining rule includes:

    (1) The time offset is obtained by counting time-domain consecutive valid ROs that are at a same frequency location, that are associated with a same SSB, and on which preamble sets associated with the SSB are the same.
    (2) The time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission. That is, in the foregoing scenario shown in FIG. 1f, RO#1 is unavailable for SSB#0, but is available for SSB#2. In this case, according to the time offset determining rule in this embodiment of this application, RO#1 is not counted in a quantity of valid ROs when the quantity of valid ROs is calculated.

It should be noted that, before the terminal determines the time offset, the following optionally needs to be met: preamble sets associated with a same SSB on different ROs are not all the same, where $\frac{1}{N} * N_{TX}^{SSB}$ is a decimal number greater than 1 or $\frac{1}{N} * N_{TX}^{SSB}$ is a decimal number less than 1, and $1/(\frac{1}{N} * N_{TX}^{SSB})$ is not an integer, where $N$ is a quantity of SSBs associated with one RO, and $N_{TX}^{SSB}$ is a quantity of all SSBs.

In this embodiment of this application, a new time offset determining rule is set: The time offset is obtained by counting time-domain consecutive valid ROs that are at a same frequency location, that are associated with a same SSB, and on which preamble sets associated with the SSB are the same; or the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission. In a process of determining the time offset, an impact of the preamble set associated with the SSB on the RO is also considered, so that it is more accurately determined whether the RO associated with the SSB is available and needs to be detected. In this way, the terminal and the network-side device have a consistent understanding of an RO group used for PRACH repetition transmission, thereby improving performance of PRACH repetition transmission. In addition, in this embodiment of this application, performance of PRACH repetition transmission is improved, and pressure of PRACH detection on the network side is alleviated.

In a possible implementation, the determining, by the terminal, a target RO group based on the time offset includes:

in a case that a preset condition is met, determining, by the terminal, the target RO group based on the time offset, where the preset condition includes one or more of the following:

(1) a value of the time offset is configured; for example, the network side may preconfigure the value of the time offset for the terminal;

(2) $\frac{1}{N} * N_{TX}^{SSB}$ is an integer value;

(3) $1/(\frac{1}{N} * N_{TX}^{SSB})$ is an integer value; or

(4) for all ROs that are at a same frequency domain location and that are associated with a same SSB, preamble sets associated with the SSB on the ROs are all the same, where

$N$ is a quantity of SSBs associated with one RO, and $N_{TX}^{SSB}$ is a quantity of all SSBs.

In this embodiment of this application, a case in which the time offset is used to determine the target RO group is determined, that is, in a case that at least one of the foregoing (1) to (4) is met, the terminal determines the target RO group based on the time offset.

It should be noted that when N≥1, it indicates that N SSBs are associated with a same RO. When N<1, it indicates that one SSB is associated with 1/N ROs.

In a possible implementation, the determining, by the terminal, a target RO group based on the time offset includes:

(1) determining, by the terminal within a first time range, a starting RO (starting RO) of the first RO group associated with a target SSB;
(2) determining, by the terminal, a plurality of RO groups based on the starting RO of the first RO group and the time offset; and
(3) determining, by the terminal, the target RO group from the plurality of RO groups.

The first time range may be specifically a preset time window X, and the target SSB is selected by the terminal, that is, as described above, is selected by comparing RSRP of a received beam (SSB) with a preset threshold, or the target SSB is an SSB indicated by the network-side device, that is, the network side explicitly or implicitly indicates the target SSB to the terminal.

The first time range may include K SSB-to-RO association pattern periods. Within the first time range, for all PRACH repetition numbers configured by the network, at least one RO group may be determined for all SSBs.

One SSB-to-RO association pattern period (association pattern period) may include at least one SSB-to-RO association period (association period).

In this embodiment of this application, the terminal determines, within the preset time window X based on the target SSB, an RO group for PRACH repetition transmission. The terminal first determines the starting RO of the first RO group, then determines the plurality of RO groups based on the starting RO of the first RO group and the time offset, and finally determines the target RO group from the plurality of RO groups.

In a possible implementation, the determining, by the terminal within a first time range, a starting RO of the first RO group associated with a target SSB includes:

(1) classifying, by the terminal, ROs associated with the target SSB into M types based on preamble sets on the associated ROs, where preamble sets associated with the SSB on each type of ROs are the same; and

(2) determining, by the terminal from each type of ROs, the first RO within the first time range as the starting RO of the first RO group first in ascending order of frequency domain and then in ascending order of time domain, or determining, by the terminal from each type of ROs at each frequency location, the first RO within the first time range as the starting RO of the first RO group in ascending order of time domain.

In a possible implementation, the determining, by the terminal, a plurality of RO groups based on the starting RO of the first RO group and the time offset includes:

starting from each of moments corresponding to the starting RO of the first RO group+(time offset)*m ROs, determining, by the terminal within the first time range (for example, a preset time window X), a starting RO of a subsequent RO group first in frequency-domain order and then in time-domain order, where a value of m includes one or more integers that are not less than 0, where it may be understood that a plurality of starting moments can be determined by adjusting different m values; however, setting of the m value needs to meet that the starting moment does not exceed the first time range; and

determining, by the terminal, the plurality of RO groups based on the starting RO.

In a possible implementation, the determining, by the terminal, a plurality of RO groups based on the starting RO of the first RO group and the time offset includes:

starting from each of moments corresponding to the starting RO of the first RO group+(time offset)*m ROs within the first time range, determining, by the terminal within a second time range (for example, a preset time range X2), the starting RO of the subsequent RO group from an RO other than an RO in a determined RO group first in ascending order of frequency domain and then in ascending order of time domain, where a value of m includes one or more integers that are not less than 0, and the second time range is a time length corresponding to the first RO group within the first time range, or a quantity of moments included in the first RO group, or a quantity of moments included in the first RO group minus 1; and

determining, by the terminal, the plurality of RO groups based on the starting RO.

In a possible implementation, the determining, by the terminal, the target RO group from the plurality of RO groups includes one or more of the following:

(1) determining, as the target RO group first in ascending order of frequency domain and then in ascending order of time domain, the first available RO group that is closest to a current time within the first time range and that is associated with the target SSB;

(2) determining, as the target RO group, an available RO group that is closest to a current time within the first time range, that is associated with the selected target SSB, and that is at a lowest frequency location; or

(3) determining, as the target RO group, an available RO group that is closest to a current time within the first time range, that is associated with the selected target SSB, and that is at a highest frequency location, where

an RO in the available RO group is after the current time.

It should be noted that, when the available RO group closest to the current time is selected, it is required that the RO in the RO group needs to be after the current time, that is, the following needs to be met: all ROs in the available RO group are available relative to the current time.

In a possible implementation, the method further includes the following:

(1) in a case that the preset condition is not met, determining, by the terminal within a first time range, a starting RO of the first RO group associated with a target SSB; and

(2) determining, by the terminal within the first time range, a starting RO of a subsequent RO group associated with the target SSB first in ascending order of frequency domain locations and then in ascending order of time domain locations.

The foregoing describes a preset condition for determining the target RO group by the terminal based on the time offset. In this embodiment of this application, for a case in which the preset condition is not met, a method for determining the target RO group is provided.

In a possible implementation, the determining, by the terminal in a case that the time offset is not preconfigured, a value of the time offset includes: determining, by the terminal, that the value of time offset is any one of the following:

(1) a first repetition transmission number, where the first repetition transmission number is a repetition transmission number that is correspondingly configured for the terminal to perform PRACH repetition transmission on the target RO group; and

(2) a second repetition transmission number, where the second repetition transmission number is one of a plurality of configured PRACH repetition transmission numbers.

In this embodiment of this application, for a case in which the value of time offset is not preconfigured, a manner of determining the value of time offset is provided. A PRACH repetition transmission number may be preconfigured by the network side to the terminal, and one or more numbers may be configured. If one number is configured, the foregoing manner of determining the value of the time offset in (1) may be used. If a plurality of numbers are configured, the foregoing manner of determining the value of the time offset in (2) may be used. A target PRACH repetition transmission number may be configured by the network or specified by the protocol, for example, the target PRACH repetition transmission number may be a maximum PRACH repetition number.

In a possible implementation, the time offset meets the following:

a minimum value of the time offset is a configurable minimum PRACH repetition transmission number, and a maximum value of the time offset is greater than or equal to a configurable maximum PRACH repetition transmission number.

In this embodiment of this application, a requirement for a value range of the time offset is determined.

In a possible implementation, the time offset meets the following:

different PRACH repetition transmission numbers correspond to a same time offset, or different PRACH repetition transmission numbers correspond to different time offsets.

In a possible implementation, a random access resource configuration of the PRACH repetition transmission is used for a system information request, where the random access resource configuration of the PRACH repetition transmission includes one of the following:

at least one of a system information request period si-RequestPeriod, a random access association period index ra-AssociationPeriodIndex, and an RO mask index ra-ssb-OccasionMaskIndex is not configured;
a system information request period and a random access association period index are configured, where the system information request period and the random access association period index are in units of a first time range; and
a system information request period and a random access association period index are configured, where the system information request period and the random access association period index are in units of an SSB-to-RO association period.

It may be understood that, "at least one of a system information request period si-RequestPeriod, a random access association period index ra-Association-PeriodIndex, and an RO mask index ra-ssb-Occasion-MaskIndex is not configured" may mean that at least one of the system information request period si-RequestPeriod, the random access association period index ra-AssociationPeriodIndex, and the RO mask index ra-ssb-OccasionMaskIndex is not configured or selected for configuration. Alternatively, the random access resource configuration of the PRACH repetition transmission does not include at least one of the three parameters: the system information request period si-RequestPeriod, the random access association period index ra-AssociationPeriodIndex, and the RO mask index ra-ssb-OccasionMaskIndex. For example, "the system information request period si-RequestPeriod is not configured" may be understood as: the random access resource configuration of the PRACH repetition transmission does not include the system information request period si-RequestPeriod.

The system information request period is a period in which the terminal transmits a PRACH or repeatedly transmits a PRACH to request system information. The terminal performs PRACH transmission once or PRACH repetition transmission (including a plurality of PRACH transmissions) once within one system information request period. The random access association period index is used to indicate a time range in the system information request period. The UE transmits a PRACH or repeatedly transmits a PRACH within a time range that is indicated by the random access association period index and that is in a system information request period.

In a possible implementation, that the system information request period and the random access association period index are configured in units of the SSB-to-RO association period meets at least one of the following:

a time length of the determined target RO group is not greater than the system information request period;
all ROs in the determined target RO group are within one system information request period;
a time length of the time offset is not greater than the system information request period; and
a time range indicated by the random access association period index is not outside a time range of the determined target RO group.

In a possible implementation, the time length of the determined target RO group is a time length corresponding to a time length from a moment corresponding to the first RO to a moment corresponding to the last RO in the determined target RO group.

In a possible implementation, the time range of the determined target RO group is a time range corresponding to a time period from a moment corresponding to the first RO to a moment corresponding to the last RO in the determined target RO group.

It may be understood that "a time range indicated by the random access association period index is not outside a time range of the determined target RO group" may mean that the time range indicated by the random access association period index is included in the range of the determined target RO group.

Referring to FIG. 3, an embodiment of this application provides a PRACH repetition transmission method. The method may also be referred to as a preamble repetition-based PRACH transmission method. The method is performed by a network-side device, and the method includes the following steps:

Step 301: The network-side device determines a time offset.
Step 302: The network-side device determines all available RO groups based on the time offset.
Step 303: The network-side device performs PRACH repetition reception on all the available RO groups.

The time offset is obtained by counting time-domain consecutive valid ROs that are at a same frequency location, that are associated with a same SSB, and on which preamble sets associated with the SSB are the same.

Alternatively, the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

It should be noted that, the network side serves as a counterpart of the terminal. To ensure that PRACH repetition transmission can be correctly performed, rules and methods used by the network side when determining the time offset and determining a target RO group based on the time offset need to be consistent with those used by the terminal side. This ensures that the network side and the terminal have a same understanding, so that a transmit end and a receive end use a consistent RO group, to ensure successful PRACH repetition reception.

It should also be noted that, for the network side, all RO groups corresponding to all SSBs need to be determined, and the network side does not need to determine the target RO group, or the target RO group determined by the network side is all available RO groups. After the network-side determines all the available RO groups, the network side performs blind detection on all the available RO groups.

In this embodiment of this application, for descriptions of specific content of the network-side solution, correspondingly refer to descriptions of the terminal-side solution for understanding, and details are not described herein again.

In a possible implementation, the determining, by the network-side device, all available RO groups based on the time offset includes:

in a case that a preset condition is met, determining, by the network-side device, all the available RO groups based on the time offset, where the preset condition includes one or more of the following:

a value of the time offset is configured;

$\frac{1}{N} * N_{TX}^{SSB}$ is an integer value;

$1/(\frac{1}{N} * N_{TX}^{SSB})$ is an integer value; or

for all ROs that are at a same frequency domain location and that are associated with a same SSB, preamble sets associated with the SSB on the ROs are all the same, where
N is a quantity of SSBs associated with one RO, and $N_{TX}^{SSB}$ is a quantity of all SSBs.

In a possible implementation, the determining, by the network-side device, all available RO groups based on the time offset includes:

separately determining, by the network-side device for all SSBs within a first time range, a starting RO of the first RO group associated with each SSB; and determining, by the network-side device, all the available RO groups based on the starting RO of the first RO group and the time offset.

In a possible implementation, the separately determining, by the network-side device for all SSBs within a first time range, a starting RO of the first RO group associated with each SSB includes:

classifying, by the network-side device, ROs associated with the SSB into M types based on preamble sets on the ROs associated with the same SSB, where preamble sets associated with the same SSB on each type of ROs are the same; and determining, by the network-side device from each type of ROs, the first RO within the first time range as the starting RO of the first RO group first in ascending order of frequency domain and then in ascending order of time domain, or determining, by the network-side device from each type of ROs at each frequency location, the first RO within the first time range as the starting RO of the first RO group in ascending order of time domain.

In a possible implementation, the determining, by the network-side device, all the available RO groups based on the starting RO of the first RO group and the time offset includes:

starting from each of moments corresponding to the starting RO of the first RO group+(time offset)*m ROs, determining, by the network-side device within the first time range, a starting RO of a subsequent RO group first in frequency-domain order and then in time-domain order, where a value of m includes one or more integers that are not less than 0; and determining, by the network-side device, all the available RO groups based on the starting RO.

In a possible implementation, the determining, by the network-side device, all the available RO groups based on the starting RO of the first RO group and the time offset includes:

starting from each of moments corresponding to the starting RO of the first RO group+(time offset)*m ROs within the first time range, determining, by the network-side device within a second time range, the starting RO of the subsequent RO group from an RO other than an RO in a determined RO group first in ascending order of frequency domain and then in ascending order of time domain, where a value of m includes one or more integers that are not less than 0, and the second time range is a time length corresponding to the first RO group within the first time range, or a quantity of moments included in the first RO group, or a quantity of moments included in the first RO group minus 1; and determining, by the network-side device, all the available RO groups based on the starting RO.

In a possible implementation, the method further includes the following:

in a case that the preset condition is not met, separately determining, by the network-side device for all SSBs within a first time range, a starting RO of the first RO group associated with each SSB; and determining, by the network-side device within the first time range, a starting RO of a subsequent RO group first in ascending order of frequency domain locations and then in ascending order of time domain locations.

In a possible implementation, the determining, by the network-side device in a case that the time offset is not preconfigured, a value of the time offset includes: determining, by the network-side device, that the value of the time offset is any one of the following:

a first repetition transmission number, where the first repetition transmission number is a repetition transmission number that is correspondingly configured by the network-side device for PRACH repetition transmission by the terminal on the target RO group; and a second repetition transmission number, where the second repetition transmission number is one of a plurality of PRACH repetition transmission numbers that are configured by the network-side device.

In a possible implementation, the time offset meets the following: a minimum value of the time offset is a configurable minimum PRACH repetition transmission number, and a maximum value of the time offset is greater than or equal to a configurable maximum PRACH repetition transmission number.

In a possible implementation, the time offset meets the following: different PRACH repetition transmission numbers correspond to a same time offset, or different PRACH repetition transmission numbers correspond to different time offsets.

In a possible implementation, the method further includes the following: configuring, by the network-side device, a random access resource configuration that is of the PRACH repetition transmission and that is used for system information request, where the random access resource configuration of the PRACH repetition transmission includes one of the following:

at least one of a system information request period si-RequestPeriod, a random access association period index ra-AssociationPeriodIndex, and an RO mask index ra-ssb-OccasionMaskIndex is not configured; a system information request period and a random access association period index are configured, where the system information request period and the random access association period index are in units of a first time range; and a system information request period and a random access association period index are configured, where the system information request period and the random access association period index are in units of an SSB-to-RO association period.

In a possible implementation, that the system information request period and the random access association period index are configured in units of the SSB-to-RO association period meets at least one of the following:

a time length of the determined target RO group is not greater than the system information request period; all ROs in the determined target RO group are within one system information request period; a time length of the time offset is not greater than the system information request period; and a time range indicated by the random access association period index is not outside a time range of the determined target RO group.

The following describes the technical solutions of this application with reference to specific embodiments:

Embodiment 1:

A case in which preamble sets associated with a same SSB on different ROs are not all the same ( $\frac{1}{N} * N_{TX}^{SSB}$ is a decimal number greater than 1 or $\frac{1}{N} * N_{TX}^{SSB}$ is a decimal number less than 1, and

$1/(\frac{1}{N} * N_{TX}^{SSB})$ is not an integer):

Embodiments 1-1: The time offset is obtained by counting time-domain consecutive valid ROs that are at a same frequency location, that are associated with a same SSB, and on which preamble sets associated with the SSB are the same.

For example, N=2,

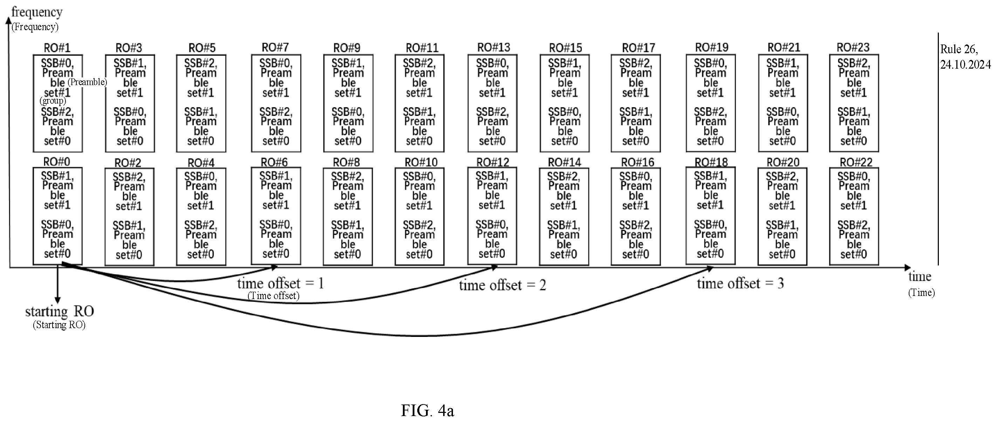

$N_{TX}^{SSB} = 3$, $\frac{1}{N} * N_{TX}^{SSB} = 2/3$, and an association relationship between an SSB and an RO/preamble is shown in FIG. 4a.

In the figure, every two SSBs are associated with a same RO. Two SSBs on a same RO occupy a same frequency domain resource, differing only in preamble sets. For example, for SSB#0, SSB#0 is associated with preamble set#0 on RO#0. {RO#6, RO#12, RO#18} are all associated with SSB#0, are at a same frequency domain location as RO#0, and are associated with a same preamble set. {RO#4, RO#10, RO#16, RO#22} are at a same frequency domain location as RO#0, but are associated with different preamble sets (associated with preamble set#1). Therefore, for SSB#0, when RO#0 is used as a starting RO to calculate the time offset, only RO#6, RO#12, and RO#18 are counted. A next starting RO corresponding to a case in which the time offset=1 is RO#6, a next starting RO corresponding to a case in which the time offset=2 is RO#12, and a next starting RO corresponding to a case in which the time offset=3 is RO#18.

Embodiments 1-2: The time offset is obtained by counting time-domain consecutive valid ROs that are at a same frequency location and that are associated with a same SSB, where when an RO is unavailable for at least one SSB, the RO is considered unavailable.

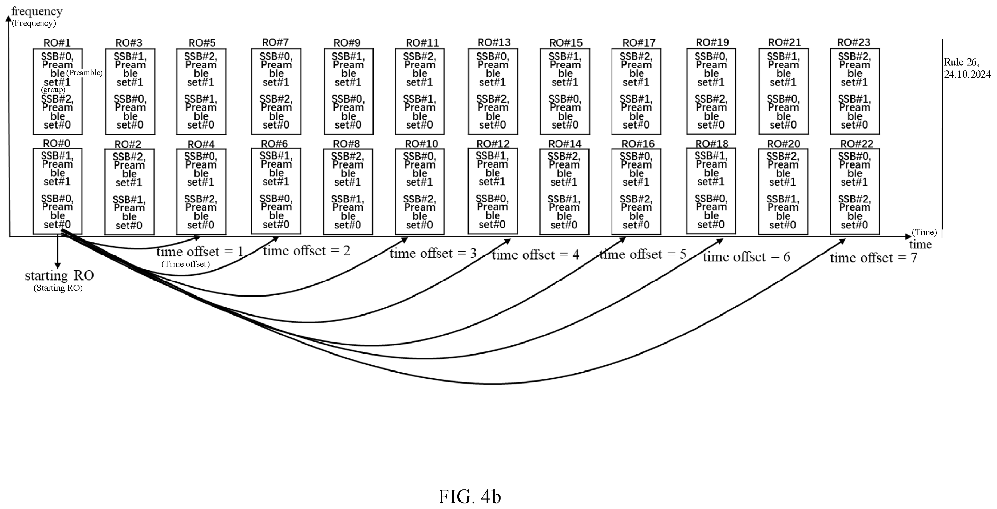

For example, for SSB#0, RO#0 is used as a starting RO, and {RO#4, RO#6, RO#10, RO#12, RO#16, RO#18, RO#22} are all associated with SSB#0 and are at a same frequency domain location as RO#0. Next starting ROs separately corresponding to cases in which the time offset=1~7 are shown in FIG. 4b.

It is assumed that a PRACH repetition number is two. In this case, {RO#0, RO#6} is an RO group associated with SSB#1, and {RO#2, RO#8} is an RO group associated with SSB#2. It is assumed that the time offset=3. In this case, RO#2 is unavailable for SSB#1, but is available for SSB#2. In this case, it is considered that RO#2 is unavailable for both SSB#1 and SSB#2, the UE does not transmit a preamble on RO#2, and the network side does not perform detection on RO#2.

Embodiment 1-3: For a same SSB, ROs associated with the SSB are classified into M types based on preamble sets on the associated ROs, where preamble sets associated with the SSB on each type of ROs are the same. Within a time window X, a starting RO of the first RO group is separately determined from each type of ROs, or a starting RO of the first RO group is separately determined from each type of ROs at a same frequency.

For example, in FIG. 4b, for SSB#0, {RO#0, RO#1, RO#3, RO#4, RO#6, RO#7, RO#9, RO#10, RO#12, RO#13, RO#15, RO#16, RO#18, RO#19, RO#21, RO#22} associated with SSB#0 may be classified into two types: a first type {RO#0, RO#3, RO#6, RO#9, RO#12, RO#15, RO#18, RO#21} and a second type {RO#1, RO#4, RO#7, RO#10, RO#13, RO#16, RO#19, RO#22}. On the first type of ROs, SSB#0 is associated with preamble set#0. On the second type of ROs, SSB#0 is associated with preamble set#1. Within the time window X, the starting RO of the first RO group in the first type of ROs is RO#0, and the starting RO of the first RO group in the second type of ROs is RO#1. Alternatively, within the time window X, the starting RO of the first RO group is separately determined from each type of ROs at a same frequency location. In the figure, at a low frequency location, the starting RO of the first RO group in the first type of ROs is RO#0, and the starting RO of the first RO group in the second type of ROs is RO#4; at a high frequency location, the starting RO of the first RO group in the first type of ROs is RO#3, and the starting RO of the first RO group in the second type of ROs is RO#1.

Embodiment 2:

Embodiment 2-1: If the time offset is not configured, the time offset may be equal to a corresponding PRACH repetition number (RO group size) by default. Alternatively, the time offset is equal to a configured maximum PRACH repetition number (maximum RO group size) by default.

For example, a network-configured PRACH repetition number set is {2, 4, 8}. In this case, when an RO group is determined, time offsets corresponding to the PRACH repetition numbers 2, 4, and 8 are 2, 4, and 8 respectively. For another example, a network-configured PRACH repetition number set is {2, 4, 8}. In this case, when an RO group is determined, time offsets corresponding to the PRACH repetition numbers 2, 4, and 8 are all 8.

Embodiment 2-2: A minimum value of the time offset is a configurable minimum PRACH repetition number, and a maximum value thereof is greater than a configurable maximum PRACH repetition number. Different PRACH repetition numbers may share one time offset, or may use corresponding time offsets.

For example, a PRACH repetition number that can be configured by the network is {2, 4, 8}. The minimum value of the time offset is 2, and the maximum value thereof is greater than 8.

Embodiment 2-3: When a value of the time offset is configured and $\frac{1}{N} * N_{TX}^{SSB}$ is an integer value or $1/(\frac{1}{N} * N_{TX}^{SSB})$ is an integer value, an RO group is determined based on the time offset. Otherwise, an RO group is determined according to a rule existing when the time offset is not configured. $\frac{1}{N} * N_{TX}^{SSB}$ That is an integer value indicates that a quantity of ROs required for $N_{TX}^{SSB}$ SSBs to complete one mapping cycle (mapping cycle) is an integer. That $1/(\frac{1}{N} * N_{TX}^{SSB})$ is an integer value indicates that an integer quantity of mapping cycles can be completed on one RO. For example, when N<1, one SSB is associated with $\frac{1}{N}$ consecutive ROs, and a quantity of ROs required for $N_{TX}^{SSB}$ SSBs to complete one mapping cycle is an integer. When N>1, for example, N=4, $N_{TX}^{SSB}=4$, and a quantity of ROs required by $N_{TX}^{SSB}$ SSBs to complete one mapping cycle is 1.

Embodiments 2-4: Based on an RO group determining rule, the UE selects, within the time window X, the first available RO group that is closest to a current time and that is associated with a selected SSB, to perform PRACH repetition transmission.

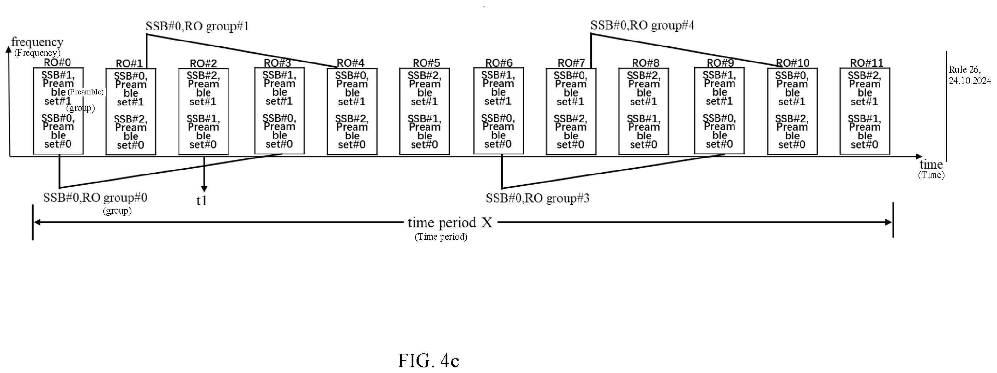

For example, as shown in FIG. 4c, the UE triggers, at a time t1, PRACH repetition transmission with a repetition number of 2, and the UE selects SSB#0. Within the time window X, an RO group that is closest to the time t1 and that is associated with SSB#0 is RO group#3={RO#6, RO#9}. In this case, the UE selects RO group#3 to perform PRACH repetition transmission.

Embodiments 2-5: For each SSB, starting from each of moments corresponding to the starting RO of the first RO group+(time offset)*m ROs within the time window X, within a time range X2/within M/(M-1) moments, a starting RO of a subsequent RO group is sequentially determined from an RO other than an RO in a determined RO group first in ascending order of frequency domain and then in ascending order of time domain, where m is an integer greater than or equal to 0, X2 is a time length/time span corresponding to the first RO group within the time range X, and M is a quantity of moments included in the first RO group within X.

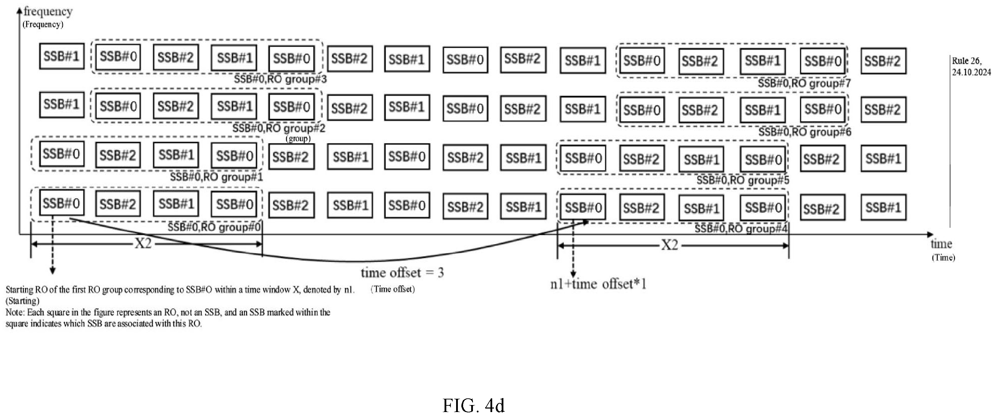

For example, as shown in FIG. 4d, it is assumed that a PRACH repetition number is 2, and the time offset=3. For SSB#0, the starting RO of the first RO group within the time window X is found first in time-domain order and then in frequency-domain order, and is denoted as n1, and RO group#0 is determined. A time span corresponding to RO group#0 is four moments. In this case, starting from a moment corresponding to n1 and a moment at which an RO corresponding to n1+(time offset)*1 is located, within 4/(4-1) moments, a starting RO of a subsequent RO group and a corresponding RO group may be sequentially determined from an RO other than the RO in the determined RO group first in ascending order of frequency domain and then in ascending order of time domain.

Embodiments 2-6: The foregoing embodiments may be implemented in combination. For example, the time offset in Embodiment 2-5 may be the time offset defined in Embodiment 1-1, or may be the time offset defined in Embodiment 1-2.

Embodiment 3:

Embodiment 3-1: A system information request period si-RequestPeriod and a random access association period index ra-AssociationPeriodIndex that are configured by the network are indicated in units of a first time range. For example, the first time range is a time window X, where X includes K SSB-to-RO association pattern periods. In this case, the system information request period si-RequestPeriod and the random access association period index ra-AssociationPeriodIndex are indicated in units of X. For example, the system information request period si-RequestPeriod includes N2 time windows X, and the random access association period index ra-AssociationPeriodIndex indicates at least one time window X in the system information request period si-RequestPeriod.

Embodiment 3-2: A system information request period si-RequestPeriod and a random access association period index ra-AssociationPeriodIndex that are configured by the network are indicated in units of an SSB-to-RO association period. For example, the system information request period si-RequestPeriod includes N3 SSB-to-RO association periods association periods, and the random access association period index ra-AssociationPeriodIndex indicates at least one SSB-to-RO association period in the system information request period si-RequestPeriod. In this case, the system information request period si-RequestPeriod and the random access association period index ra-AssociationPeriodIndex should be configured to ensure at least one of the following:

a time length (namely, a time length corresponding to a time length from a moment corresponding to the first RO to a moment corresponding to the last RO in the RO group) of the determined RO group is not greater than the system information request period; all ROs in the determined RO group are within one system information request period;

a time length of the configured time offset is not greater than the system information request period; and

a time range indicated by the random access association period index is not outside a time range (a time range corresponding to a time period from a moment corresponding to the first RO to a moment corresponding to the last RO in the RO group) of the determined RO group.

The PRACH repetition transmission method provided in the embodiments of this application may be performed by a PRACH repetition transmission method. In the embodiments of this application, the PRACH repetition transmission apparatus provided in the embodiments of this application is described by using an example in which the PRACH repetition transmission apparatus performs the PRACH repetition transmission method.

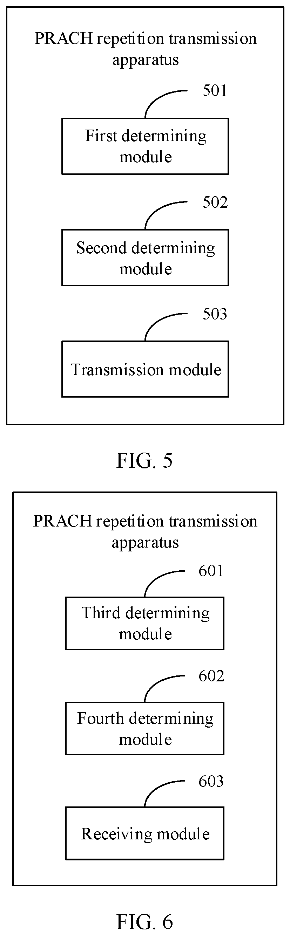

Referring to FIG. 5, an embodiment of this application provides a PRACH repetition transmission apparatus. The apparatus may be applied to a terminal, and the apparatus includes:

a first determining module 501, configured to determine, by the terminal, a time offset;

a second determining module 502, configured to determine, by the terminal, a target RO group based on the time offset; and

a transmission module 503, configured to perform, by the terminal, PRACH repetition transmission on the target RO group, where

the time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

Optionally, the second determining module is specifically configured to:

in a case that a preset condition is met, determine, by the terminal, the target RO group based on the time offset, where

the preset condition includes one or more of the following:

a value of the time offset is configured;

$$\frac{1}{N} * N_{TX}^{SSB} \quad \text{is an integer value;}$$

$$1/(\frac{1}{N} * N_{TX}^{SSB}) \quad \text{is an integer value; or}$$

for all ROs that are at a same frequency domain location and that are associated with a same SSB, preamble sets associated with the SSB on the ROs are all the same, where

$N$ is a quantity of SSBs associated with one RO, and $N_{TX}^{SSB}$ is a quantity of all SSBs.

Optionally, the second determining module is specifically configured to:

determine, by the terminal within a first time range, a starting RO of the first RO group associated with a target SSB;

determine, by the terminal, a plurality of RO groups based on the starting RO of the first RO group and the time offset; and

determine, by the terminal, the target RO group from the plurality of RO groups, where

the target SSB is an SSB selected by the terminal or indicated by a network-side device.

Optionally, the second determining module is specifically configured to:

classify, by the terminal, ROs associated with the target SSB into M types based on preamble sets on the associated ROs, where preamble sets associated with the SSB on each type of ROs are the same; and

determine, by the terminal from each type of ROs, the first RO within the first time range as the starting RO of the first RO group first in ascending order of frequency domain and then in ascending order of time domain, or determine, by the terminal from each type of ROs at each frequency location, the first RO within the first time range as the starting RO of the first RO group in ascending order of time domain.

Optionally, the second determining module is specifically configured to:

starting from each of moments corresponding to the starting RO of the first RO group+(time offset)*m ROs, determine, by the terminal within the first time range, a starting RO of a subsequent RO group first in frequency-domain order and then in time-domain order, where a value of m includes one or more integers that are not less than 0; and

determine, by the terminal, the plurality of RO groups based on the starting RO.

Optionally, the second determining module is specifically configured to:

starting from each of moments corresponding to the starting RO of the first RO group+(time offset)*m ROs within the first time range, determine, by the terminal within a second time range, the starting RO of the subsequent RO group from an RO other than an RO in a determined RO group first in ascending order of frequency domain and then in ascending order of time domain, where a value of m includes one or more integers that are not less than 0, and the second time range is a time length corresponding to the first RO group within the first time range, or a quantity of moments included in the first RO group, or a quantity of moments included in the first RO group minus 1; and

determine, by the terminal, the plurality of RO groups based on the starting RO.

Optionally, the second determining module is specifically configured to perform one or more of the following:

determining, as the target RO group first in ascending order of frequency domain and then in ascending order of time domain, the first available RO group that is closest to a current time within the first time range and that is associated with the target SSB;

determining, as the target RO group, an available RO group that is closest to a current time within the first time range, that is associated with the selected target SSB, and that is at a lowest frequency location; or

determining, as the target RO group, an available RO group that is closest to a current time within the first time range, that is associated with the selected target SSB, and that is at a highest frequency location, where

an RO in the available RO group is after the current time.

Optionally, the apparatus further includes:

a fifth determining module, configured to: in a case that the preset condition is not met, determine, by the terminal within a first time range, a starting RO of the first RO group associated with a target SSB; and

a sixth determining module, configured to determine, by the terminal within the first time range, a starting RO of a subsequent RO group associated with the target SSB first in ascending order of frequency domain locations and then in ascending order of time domain locations.

Optionally, in a case that the time offset is not preconfigured, the first determining module is specifically configured to:

determine, by the terminal, that the value of the time offset is any one of the following:

a first repetition transmission number, where the first repetition transmission number is a repetition transmission number that is correspondingly configured for the terminal to perform PRACH repetition transmission on the target RO group; and

a second repetition transmission number, where the second repetition transmission number is one of a plurality of configured PRACH repetition transmission numbers.

Optionally, the time offset meets the following: a minimum value of the time offset is a configurable minimum PRACH repetition transmission number, and a maximum value of the time offset is greater than or equal to a configurable maximum PRACH repetition transmission number.

Optionally, the time offset meets the following: different PRACH repetition transmission numbers correspond to a same time offset, or different PRACH repetition transmission numbers correspond to different time offsets.

Optionally, a random access resource configuration of the PRACH repetition transmission is used for a system information request, where the random access resource configuration of the PRACH repetition transmission includes one of the following:

at least one of a system information request period si-RequestPeriod, a random access association period index ra-AssociationPeriodIndex, and an RO mask index ra-ssb-OccasionMaskIndex is not configured;

a system information request period and a random access association period index are configured, where the system information request period and the random access association period index are in units of a first time range; and

a system information request period and a random access association period index are configured, where the system information request period and the random access association period index are in units of an SSB-to-RO association period.

Optionally, that the system information request period and the random access association period index are configured in units of the SSB-to-RO association period meets at least one of the following:

a time length of the determined target RO group is not greater than the system information request period;

all ROs in the determined target RO group are within one system information request period;

a time length of the time offset is not greater than the system information request period; and

a time range indicated by the random access association period index is not outside a time range of the determined target RO group.

Referring to FIG. 6, an embodiment of this application provides a PRACH repetition transmission apparatus. The apparatus may be applied to a network-side device, and the apparatus includes:

a third determining module 601, configured to determine, by the network-side device, a time offset;
a fourth determining module 602, configured to determine, by the network-side device, all available RO groups based on the time offset; and
a receiving module 603, configured to perform, by the network-side device, PRACH repetition reception on all the available RO groups, where
the time offset is obtained by counting time-domain consecutive valid ROs that are at a same frequency location, that are associated with a same SSB, and on which preamble sets associated with the SSB are the same; or
the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

Optionally, the fourth determining module is specifically configured to:

in a case that a preset condition is met, determine, by the network-side device, all the available RO groups based on the time offset, where
the preset condition includes one or more of the following:

a value of the time offset is configured;

$$\frac{1}{N} * N_{TX}^{SSB}$$

is an integer value;

$$1/(\frac{1}{N} * N_{TX}^{SSB})$$

is an integer value; or
for all ROs that are at a same frequency domain location and that are associated with a same SSB, preamble sets associated with the SSB on the ROs are all the same, where
N is a quantity of SSBs associated with one RO, and $N_{TX}^{SSB}$ is a quantity of all SSBs.

Optionally, the fourth determining module is specifically configured to:

separately determine, by the network-side device for all SSBs within a first time range, a starting RO of the first RO group associated with each SSB; and determine, by the network-side device, all the available RO groups based on the starting RO of the first RO group and the time offset, where
the target SSB is an SSB selected by the terminal or indicated by the network-side device.

Optionally, the fourth determining module is specifically configured to:

classify, by the network-side device, ROs associated with the SSB into M types based on preamble sets on the ROs associated with the same SSB, where preamble sets associated with the SSB on each type of ROs are the same; and
determine, by the network-side device from each type of ROs, the first RO within the first time range as the starting RO of the first RO group first in ascending order of frequency domain and then in ascending order of time domain, or determine, by the network-side device from each type of ROs at each frequency location, the first RO within the first time range as the starting RO of the first RO group in ascending order of time domain.

Optionally, the fourth determining module is specifically configured to:

starting from each of moments corresponding to the starting RO of the first RO group+(time offset)*m ROs, determine, by the network-side device within the first time range, a starting RO of a subsequent RO group first in frequency-domain order and then in time-domain order, where a value of m includes one or more integers that are not less than 0; and
determine, by the network-side device, all the available RO groups based on the starting RO.

Optionally, the fourth determining module is specifically configured to:

starting from each of moments corresponding to the starting RO of the first RO group+(time offset)*m ROs within the first time range, determine, by the network-side device within a second time range, the starting RO of the subsequent RO group from an RO other than an RO in a determined RO group first in ascending order of frequency domain and then in ascending order of time domain, where a value of m includes one or more integers that are not less than 0, and the second time range is a time length corresponding to the first RO group within the first time range, or a quantity of moments included in the first RO group, or a quantity of moments included in the first RO group minus 1; and

determine, by the network-side device, all the available RO groups based on the starting RO.

Optionally, the apparatus further includes:

a seventh determining module, configured to: in a case that the preset condition is not met, separately determine, by the network-side device for all SSBs within a first time range, a starting RO of the first RO group associated with each SSB; and

an eighth determining module, configured to determine, by the network-side device within the first time range, a starting RO of a subsequent RO group first in ascending order of frequency domain locations and then in ascending order of time domain locations.

Optionally, in a case that the time offset is not preconfigured, the third determining module is specifically configured to:
determine, by the network-side device, that the value of the time offset is any one of the following:

a first repetition transmission number, where the first repetition transmission number is a repetition transmission number that is correspondingly configured by the network-side device for PRACH repetition transmission by the terminal on the target RO group; and

a second repetition transmission number, where the second repetition transmission number is one of a plurality of PRACH repetition transmission numbers that are configured by the network-side device.

Optionally, the time offset meets the following:
a minimum value of the time offset is a configurable minimum PRACH repetition transmission number, and a maximum value of the time offset is greater than or equal to a configurable maximum PRACH repetition transmission number.

Optionally, the time offset meets the following:
different PRACH repetition transmission numbers correspond to a same time offset, or different PRACH repetition transmission numbers correspond to different time offsets.

Optionally, the apparatus further includes:
a configuration module, configured to configure a random access resource configuration that is of the PRACH repetition transmission and that is used for system information request, where the random access resource configuration of the PRACH repetition transmission includes one of the following:

at least one of a system information request period si-RequestPeriod, a random access association period index ra-AssociationPeriodIndex, and an RO mask index ra-ssb-OccasionMaskIndex is not configured;

a system information request period and a random access association period index are configured, where the system information request period and the random access association period index are in units of a first time range; and

a system information request period and a random access association period index are configured, where the system information request period and the random access association period index are in units of an SSB-to-RO association period.

Optionally, that the system information request period and the random access association period index are configured in units of the SSB-to-RO association period meets at least one of the following:

a time length of the determined target RO group is not greater than the system information request period;

all ROs in the determined target RO group are within one system information request period;

a time length of the time offset is not greater than the system information request period; and

a time range indicated by the random access association period index is not outside a time range of the determined target RO group.

The PRACH repetition transmission apparatus in this embodiment of this application may be an electronic device, for example, an electronic device with an operating system; or may be a component, for example, an integrated circuit or a chip, in an electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The PRACH repetition transmission apparatus provided in this embodiment of this application can implement the processes implemented in the method embodiments of FIG. 2 to FIG. 4d, and achieve same technical effects. To avoid repetition, details are not described herein again.

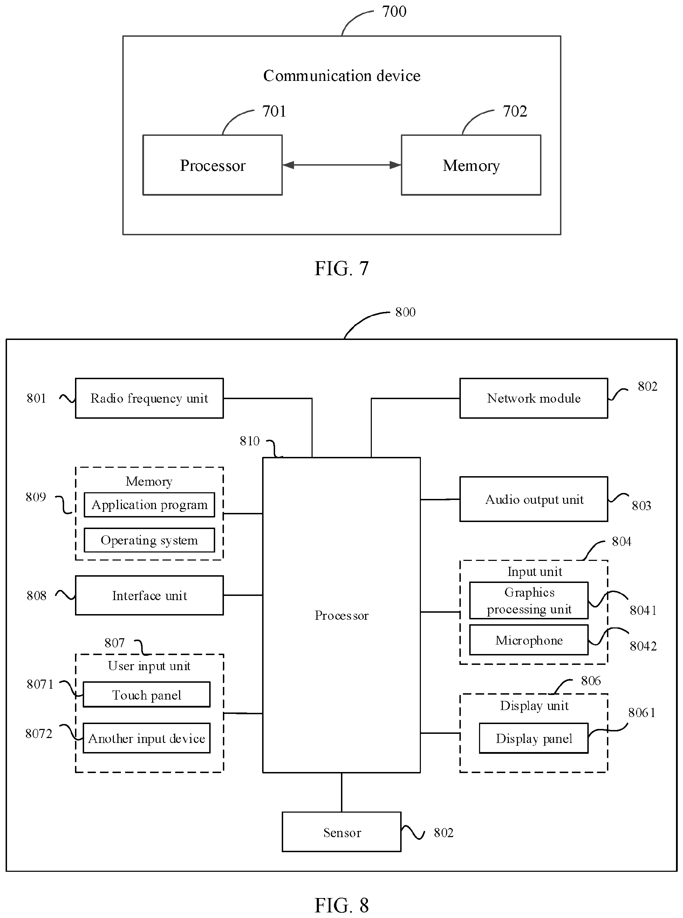

Optionally, as shown in FIG. 7, an embodiment of this application further provides a communication device 700, including a processor 701 and a memory 702. The memory 702 stores a program or instructions capable of running on the processor 701. For example, when the communication device 700 is a terminal, the program or the instructions are executed by the processor 701 to implement the steps of the method embodiment, and same technical effects can be achieved. When the communication device 700 is a network-side device, the program or the instructions are executed by the processor 701 to implement the steps of the method embodiments, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the method embodiment on the terminal side. The terminal embodiment corresponds to the foregoing terminal-side method embodiment. Each implementation process and implementation of the foregoing method embodiment may be applied to the terminal embodiment, and same technical effects can be achieved. Specifically, FIG. 8 is a schematic diagram of a hardware structure of a terminal for implementing an embodiment of this application.

The terminal 800 includes but is not limited to at least some components in a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) that supplies power to each component. The power supply may be logically connected to the processor 810 by using a power management system, to implement functions such as charging management, discharging management, and power consumption management through the power management system. The structure of the terminal shown in FIG. 8 does not constitute a limitation on the terminal. The terminal may include more or fewer components than those shown in the figure, or combine some components, or have different component arrangements. Details are not described herein again.

It should be understood that in this embodiment of this application, the input unit 804 may include a graphics processing unit (Graphics Processing Unit, GPU) 8041 and a microphone 8042. The GPU 8041 processes image data of a still picture or a video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 801 may transmit the downlink data to the processor 810 for processing. In addition, the radio frequency unit 801 may send uplink data to the network-side device. Generally, the radio frequency unit 801 includes but is not limited to an antenna, an amplifier, a transceiver, a coupler, a low-noise amplifier, a duplexer, and the like.

The memory 809 may be configured to store a software program or instructions and various types of data. The memory 809 may mainly include a first storage area for storing a program or instructions and a second storage area for storing data. The first storage area may store an operating system, an application program or instructions required by at least one function (for example, a sound play function or an image play function), and the like. In addition, the memory 809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 809 in this embodiment of this application includes but is not limited to these memories and any other suitable type of memory.

The processor 810 may include one or more processing units. Optionally, the processor 810 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 810.

The processor 810 is configured to determine, by a terminal, a time offset.

The processor 810 is configured to determine, by the terminal, a target RO group based on the time offset.

The radio frequency unit 801 is configured to perform, by the terminal, PRACH repetition transmission on the target RO group.

The time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, where preamble sets associated with the SSB on the valid ROs are not all the same, and when a part of preambles associated with one RO are not used for PRACH repetition transmission, none of preamble sets associated with the RO are capable of being used for PRACH repetition transmission.

Optionally, the processor 810 is specifically configured to:

in a case that a preset condition is met, determine, by the terminal, the target RO group based on the time offset, where

the preset condition includes one or more of the following:

a value of the time offset is configured;

$$\frac{1}{N} * N_{TX}^{SSB}$$

is an integer value;

$$1/(\frac{1}{N} * N_{TX}^{SSB})$$

is an integer value; or

for all ROs that are at a same frequency domain location and that are associated with a same SSB, preamble sets associated with the SSB on the ROs are all the same, where

$N$ is a quantity of SSBs associated with one RO, and $N_{TX}^{SSB}$ is a quantity of all SSBs.

Optionally, the processor 810 is specifically configured to:

determine, by the terminal within a first time range, a starting RO of the first RO group associated with a target SSB;

determine, by the terminal, a plurality of RO groups based on the starting RO of the first RO group and the time offset; and

determine, by the terminal, the target RO group from the plurality of RO groups, where

the target SSB is an SSB selected by the terminal or indicated by a network-side device.

Optionally, the processor 810 is specifically configured to:

classify, by the terminal, ROs associated with the target SSB into M types based on preamble sets on the associated ROs, where preamble sets associated with the SSB on each type of ROs are the same; and

determine, by the terminal from each type of ROs, the first RO within the first time range as the starting RO of the first RO group first in ascending order of frequency domain and then in ascending order of time domain, or determine, by the terminal from each type of ROs at each frequency location, the first RO within the first time range as the starting RO of the first RO group in ascending order of time domain.

Optionally, the processor 810 is specifically configured to:

starting from each of moments corresponding to the starting RO of the first RO group+(time offset)*m ROs, determine, by the terminal within the first time range, a starting RO of a subsequent RO group first in frequency-domain order and then in time-domain order, where a value of m includes one or more integers that are not less than 0; and

determine, by the terminal, the plurality of RO groups based on the starting RO.

Optionally, the processor 810 is specifically configured to:

starting from each of moments corresponding to the starting RO of the first RO group+(time offset)*m ROs within the first time range, determine, by the terminal within a second time range, the starting RO of the subsequent RO group from an RO other than an RO in a determined RO group first in ascending order of frequency domain and then in ascending order of time domain, where a value of m includes one or more integers that are not less than 0, and the second time range is a time length corresponding to the first RO group within the first time range, or a quantity of moments included in the first RO group, or a quantity of moments included in the first RO group minus 1; and

determine, by the terminal, the plurality of RO groups based on the starting RO.

Optionally, the processor 810 is specifically configured to perform one or more of the following:

determining, as the target RO group first in ascending order of frequency domain and then in ascending order of time domain, the first available RO group that is closest to a current time within the first time range and that is associated with the target SSB;

determining, as the target RO group, an available RO group that is closest to a current time within the first time range, that is associated with the selected target SSB, and that is at a lowest frequency location; or

determining, as the target RO group, an available RO group that is closest to a current time within the first time range, that is associated with the selected target SSB, and that is at a highest frequency location, where

an RO in the available RO group is after the current time.

Optionally, the processor 810 is configured to: in a case that the preset condition is not met, determine, by the terminal within a first time range, a starting RO of the first RO group associated with a target SSB; and

the processor 810 is configured to determine, by the terminal within the first time range, a starting RO of a subsequent RO group associated with the target SSB first in ascending order of frequency domain locations and then in ascending order of time domain locations.

Optionally, in a case that the time offset is not preconfigured, the processor 810 is specifically configured to:

determine, by the terminal, that the value of the time offset is any one of the following:

a first repetition transmission number, where the first repetition transmission number is a repetition transmission number that is correspondingly configured for the terminal to perform PRACH repetition transmission on the target RO group; and

a second repetition transmission number, where the second repetition transmission number is one of a plurality of configured PRACH repetition transmission numbers.

Optionally, the time offset meets the following: a minimum value of the time offset is a configurable minimum PRACH repetition transmission number, and a maximum value of the time offset is greater than or equal to a configurable maximum PRACH repetition transmission number.

Optionally, the time offset meets the following: different PRACH repetition transmission numbers correspond to a same time offset, or different PRACH repetition transmission numbers correspond to different time offsets.

It may be understood that for implementation processes of the implementations mentioned in this embodiment, refer to related descriptions in the method embodiment, and same or corresponding technical effects are achieved. To avoid repetition, details are not described herein again.

An embodiment of this application further provides a network-side device, including a processor and a communication interface. The communication interface is coupled to the processor. The processor is configured to run a program or instructions to implement the steps in the method embodiment on the network side. The network-side device embodiment corresponds to the foregoing method embodiment for the network-side device. Each implementation process and implementation of the foregoing method embodiment may be applied to the network-side device embodiment, and the same technical effects can be achieved.

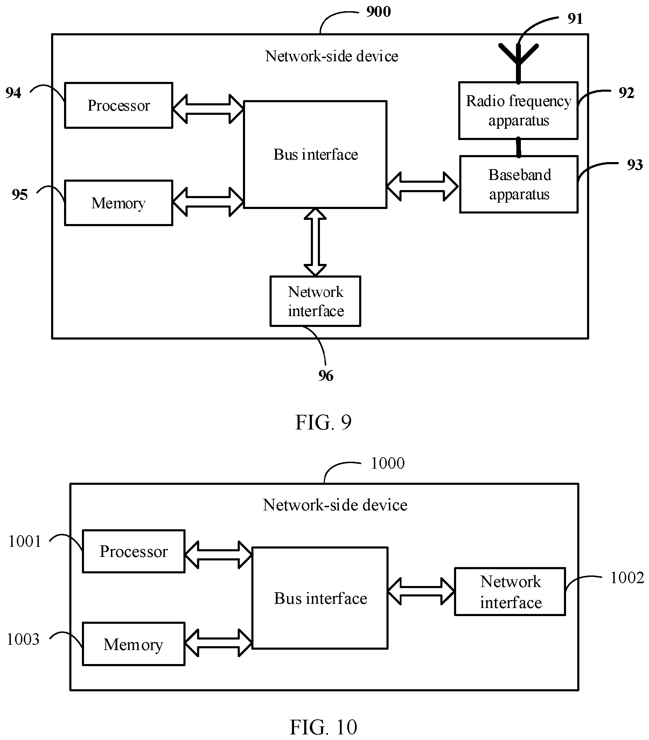

Specifically, an embodiment of this application further provides a network-side device, and the network-side device is an access network device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends processed information to the radio frequency apparatus 92. After processing the received information, the radio frequency apparatus 92 sends processed information by using the antenna 91.

The method performed by the network-side device in the foregoing embodiment may be implemented in the baseband apparatus 93. The baseband apparatus 93 includes a baseband processor.

For example, the baseband apparatus 93 may include at least one baseband board. A plurality of chips are disposed on the baseband board. As shown in FIG. 9, one of the chips is, for example, the baseband processor, and is connected to the memory 95 by using a bus interface, to invoke a program in the memory 95 to perform an operation of a network device shown in the foregoing method embodiment.

The network-side device may further include a network interface 96, and the interface is, for example, a common public radio interface (Common Public Radio Interface, CPRI).

Specifically, the network-side device 900 in this embodiment of this application further includes instructions or a program stored in the memory 95 and capable of running on the processor 94. The processor 94 invokes the instructions or the program in the memory 95 to perform the method performed by the modules shown in FIG. 6, and same technical effects are achieved. To avoid repetition, details are not described herein again.

Specifically, an embodiment of this application further provides a network-side device, and the network-side device is a core network device. As shown in FIG. 10, the network-side device 1000 includes a processor 1001, a network interface 1002, and a memory 1003. The network interface 1002 is, for example, a common public radio interface (common public radio interface, CPRI).

Specifically, the network-side device 1000 in this embodiment of this application further includes instructions or a program stored in the memory 1003 and capable of running on the processor 1001. The processor 1001 invokes the instructions or the program in the memory 1003 to perform the method performed by the modules shown in FIG. 6, and same technical effects are achieved. To avoid repetition, details are not described herein again.

An embodiment of this application further provides a readable storage medium. The readable storage medium stores a program or instructions. The program or the instructions are executed by a processor to implement the processes in the foregoing method embodiment, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, the processor is configured to run a program or instructions to implement the processes in the foregoing method embodiment, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing method embodiment, and same technical effects can be achieved. To avoid repetition, details are not described herein again.

An embodiment of this application further provides a wireless communication system, including a terminal and a network-side device. The terminal may be configured to perform the steps of the foregoing method on the terminal side, and the network-side device may be configured to perform the steps of the foregoing method on the network side.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A PRACH repetition transmission method, wherein the method comprises:

   determining, by a terminal, a time offset;
   determining, by the terminal, a target physical random access channel transmission occasion group RO group based on the time offset; and
   performing, by the terminal, physical random access channel PRACH repetition transmission on the target RO group, wherein
   the time offset is obtained by counting time-domain consecutive valid ROs that are at a same frequency location, that are associated with a same synchronization signal block SSB, and on which preamble sets associated with the SSB are the same; or
   the time offset is obtained by counting time-domain consecutive valid ROs that are at a same frequency location and that are associated with a same SSB, wherein preamble sets associated with the SSB on the valid ROs are not all the same, and when a part of preambles associated with one RO are not used for PRACH repetition transmission, none of preamble sets associated with the RO are used for PRACH repetition transmission.

2. The method according to claim 1, wherein the determining, by a terminal, a target RO group based on the time offset comprises:

in a case that a preset condition is met, determining, by the terminal, the target RO group based on the time offset, wherein the preset condition comprises one or more of the following:

a value of the time offset is configured;

$$\frac{1}{N} * N_{TX}^{SSB}$$

is an integer value;

$$1/(\frac{1}{N} * N_{TX}^{SSB})$$

is an integer value; or
for all ROs that are at a same frequency domain location and that are associated with a same SSB, preamble sets associated with the SSB on the ROs are all the same, wherein
$N$ is a quantity of SSBs associated with one RO, and $N_{TX}^{SSB}$ is a quantity of all SSBs.

3. The method according to claim 1 or 2, wherein the determining, by a terminal, a target RO group based on the time offset comprises:

determining, by the terminal within a first time range, a starting RO of the first RO group associated with a target SSB; and
determining, by the terminal, a plurality of RO groups based on the starting RO of the first RO group and the time offset, and determining, by the terminal, the target RO group from the plurality of RO groups, wherein
the target SSB is an SSB selected by the terminal or indicated by a network-side device.

4. The method according to claim 3, wherein the determining, by the terminal within a first time range, a starting RO of the first RO group associated with a target SSB comprises:

classifying, by the terminal, ROs associated with the target SSB into M types based on preamble sets on the associated ROs, wherein preamble sets associated with the SSB on each type of ROs are the same; and
determining, by the terminal from each type of ROs, the first RO within the first time range as the starting RO of the first RO group first in ascending order of frequency domain and then in ascending order of time domain, or determining, by the terminal from each type of ROs at each frequency location, the first RO within the first time range as the starting RO of the first RO group in ascending order of time domain.

5. The method according to claim 3 or 4, wherein the determining, by the terminal, a plurality of RO groups based on the starting RO of the first RO group and the time offset comprises:

starting from each of moments corresponding to the starting RO of the first RO group+(time offset)*m ROs, determining, by the terminal within the first time range, a starting RO of a subsequent RO group first in frequency-domain order and then in time-domain order, wherein a value of m comprises one or more integers that are not less than 0; and
determining, by the terminal, the plurality of RO groups based on the starting RO.

6. The method according to any one of claims 3 to 5, wherein the determining, by the terminal, a plurality of RO groups based on the starting RO of the first RO group and the time offset comprises:

starting from each of moments corresponding to the starting RO of the first RO group+(time offset)*m ROs within the first time range, determining, by the terminal within a second time range, the starting RO of the subsequent RO group from an RO other than an RO in a determined RO group first in ascending order of frequency domain and then in ascending order of time domain, wherein a value of m comprises one or more integers that are not less than 0, and the second time range is a time length corresponding to the first RO group within the first time range, or a quantity of moments comprised in the first RO group, or a quantity of moments comprised in the first RO group minus 1; and
determining, by the terminal, the plurality of RO groups based on the starting RO.

7. The method according to claim 5 or 6, wherein the determining, by the terminal, the target RO group from the plurality of RO groups comprises one or more of the following:

determining, as the target RO group first in ascending order of frequency domain and then in ascending order of time domain, the first available RO group that is closest to a current time within the first time range and that is associated with the target SSB;

determining, as the target RO group, an available RO group that is closest to a current time within the first time range, that is associated with the selected target SSB, and that is at a lowest frequency location; or

determining, as the target RO group, an available RO group that is closest to a current time within the first time range, that is associated with the selected target SSB, and that is at a highest frequency location, wherein

an RO in the available RO group is after the current time.

8. The method according to claim 2, wherein the method further comprises:

in a case that the preset condition is not met, determining, by the terminal within a first time range, a starting RO of the first RO group associated with a target SSB; and

determining, by the terminal within the first time range, a starting RO of a subsequent RO group associated with the target SSB first in ascending order of frequency domain locations and then in ascending order of time domain locations.

9. The method according to claim 1, wherein the determining, by the terminal in a case that the time offset is not preconfigured, a value of the time offset comprises:
determining, by the terminal, that the value of the time offset is any one of the following:

a first repetition transmission number, wherein the first repetition transmission number is a repetition transmission number that is correspondingly configured for the terminal to perform PRACH repetition transmission on the target RO group; and

a second repetition transmission number, wherein the second repetition transmission number is one of a plurality of configured PRACH repetition transmission numbers.

10. The method according to claim 1, wherein the time offset meets the following:
a minimum value of the time offset is a configurable minimum PRACH repetition transmission number, and a maximum value of the time offset is greater than or equal to a configurable maximum PRACH repetition transmission number.

11. The method according to claim 1, wherein the time offset meets the following:

different PRACH repetition transmission numbers correspond to a same time offset, or different PRACH repetition transmission numbers correspond to different time offsets.

12. The method according to claim 1, wherein a random access resource configuration of the PRACH repetition transmission is used for a system information request, wherein the random access resource configuration of the PRACH repetition transmission comprises one of the following:

at least one of a system information request period si-RequestPeriod, a random access association period index ra-AssociationPeriodIndex, and an RO mask index ra-ssb-OccasionMaskIndex is not configured;

a system information request period and a random access association period index are configured, wherein the system information request period and the random access association period index are in units of a first time range; and

a system information request period and a random access association period index are configured, wherein the system information request period and the random access association period index are in units of an SSB-to-RO association period.

13. The method according to claim 12, wherein that the system information request period and the random access association period index are configured in units of the SSB-to-RO association period meets at least one of the following:

a time length of the determined target RO group is not greater than the system information request period;

all ROs in the determined target RO group are within one system information request period;

a time length of the time offset is not greater than the system information request period; and

a time range indicated by the random access association period index is not outside a time range of the determined target RO group.

14. A PRACH repetition transmission method, wherein the method comprises:

determining, by a network-side device, a time offset;

determining, by the network-side device, all available RO groups based on the time offset; and

performing, by the network-side device, PRACH repetition reception on all the available RO groups, wherein

the time offset is obtained by counting time-domain consecutive valid ROs that are at a same frequency location, that are associated with a same SSB, and on which preamble sets associated with the SSB are the same; or

the time offset is obtained by counting time-domain consecutive valid ROs that are at a same frequency location and that are associated with a same SSB, wherein preamble sets associated with the SSB on the valid ROs are not all the same, and when a part of preambles associated with one RO are not used for PRACH repetition transmission, none of preamble sets associated with the RO are capable of being used for PRACH repetition transmission.

15. The method according to claim 14, wherein the determining, by the network-side device, all available RO groups based on the time offset comprises:

in a case that a preset condition is met, determining, by the network-side device, all the available RO groups based on the time offset, wherein

the preset condition comprises one or more of the following:

a value of the time offset is configured;

$$\frac{1}{N} * N_{TX}^{SSB}$$

is an integer value;

$$1/(\frac{1}{N} * N_{TX}^{SSB})$$

is an integer value; or

for all ROs that are at a same frequency domain location and that are associated with a same SSB, preamble sets associated with the SSB on the ROs are all the same, wherein

N is a quantity of SSBs associated with one RO, and $N_{TX}^{SSB}$ is a quantity of all SSBs.

16. The method according to claim 14 or 15, wherein the determining, by the network-side device, all available RO groups based on the time offset comprises:

separately determining, by the network-side device for all SSBs within a first time range, a starting RO of the first RO group associated with each SSB; and

determining, by the network-side device, all the available RO groups based on the starting RO of the first RO group and the time offset.

17. The method according to claim 16, wherein separately determining, by the network-side device for all SSBs within a first time range, a starting RO of the first RO group associated with each SSB comprises:

classifying, by the network-side device, ROs associated with the SSB into M types based on preamble sets on the ROs associated with the same SSB, wherein preamble sets associated with the same SSB on each type of ROs are the same; and

determining, by the network-side device from each type of ROs, the first RO within the first time range as the starting RO of the first RO group first in ascending order of frequency domain and then in ascending order of time domain, or determining, by the network-side device from each type of ROs at each frequency location, the first RO within the first time range as the starting RO of the first RO group in ascending order of time domain.

18. The method according to claim 16 or 17, wherein the determining, by the network-side device, all the available RO groups based on the starting RO of the first RO group and the time offset comprises:

starting from each of moments corresponding to the starting RO of the first RO group+(time offset)*m ROs, determining, by the network-side device within the first time range, a starting RO of a subsequent RO group first in frequency-domain order and then in time-domain order, wherein a value of m comprises one or more integers that are not less than 0; and

determining, by the network-side device, all the available RO groups based on the starting RO.

19. The method according to any one of claims 16 to 18, wherein the determining, by the network-side device, all the available RO groups based on the starting RO of the first RO group and the time offset comprises:

starting from each of moments corresponding to the starting RO of the first RO group+(time offset)*m ROs within the first time range, determining, by the network-side device within a second time range, the starting RO of the subsequent RO group from an RO other than an RO in a determined RO group first in ascending order of frequency domain and then in ascending order of time domain, wherein a value of m comprises one or more integers that are not less than 0, and the second time range is a time length corresponding to the first RO group within the first time range, or a quantity of moments comprised in the first RO group, or a quantity of moments comprised in the first RO group minus 1; and

determining, by the network-side device, all the available RO groups based on the starting RO.

20. The method according to claim 15, wherein the method further comprises:

in a case that the preset condition is not met, separately determining, by the network-side device for all SSBs within a first time range, a starting RO of the first RO group associated with each SSB; and
determining, by the network-side device within the first time range, a starting RO of a subsequent RO group first in ascending order of frequency domain locations and then in ascending order of time domain locations.

21. The method according to claim 14, wherein the determining, by the network-side device in a case that the time offset is not preconfigured, a value of the time offset comprises:
determining, by the network-side device, that the value of the time offset is any one of the following:

a first repetition transmission number, wherein the first repetition transmission number is a repetition transmission number that is correspondingly configured by the network-side device for PRACH repetition transmission by the terminal on the target RO group; and
a second repetition transmission number, wherein the second repetition transmission number is one of a plurality of PRACH repetition transmission numbers that are configured by the network-side device.

22. The method according to claim 14, wherein the time offset meets the following:
a minimum value of the time offset is a configurable minimum PRACH repetition transmission number, and a maximum value of the time offset is greater than or equal to a configurable maximum PRACH repetition transmission number.

23. The method according to claim 14, wherein the time offset meets the following:
different PRACH repetition transmission numbers correspond to a same time offset, or different PRACH repetition transmission numbers correspond to different time offsets.

24. The method according to claim 14, wherein the method further comprises:
configuring, by the network-side device, a random access resource configuration that is of the PRACH repetition transmission and that is used for system information request, wherein the random access resource configuration of the PRACH repetition transmission comprises one of the following:

at least one of a system information request period si-RequestPeriod, a random access association period index ra-AssociationPeriodIndex, and an RO mask index ra-ssb-Occasion-MaskIndex is not configured;
a system information request period and a random access association period index are configured, wherein the system information request period and the random access association period index are in units of a first time range; and
a system information request period and a random access association period index are configured, wherein the system information request period and the random access association period index are in units of an SSB-to-RO association period.

25. The method according to claim 24, wherein that the system information request period and the random access association period index are configured in units of the SSB-to-RO association period meets at least one of the following:

a time length of the determined target RO group is not greater than the system information request period;
all ROs in the determined target RO group are within one system information request period;
a time length of the time offset is not greater than the system information request period; and
a time range indicated by the random access association period index is not outside a time range of the determined target RO group.

26. A PRACH repetition transmission apparatus, wherein the apparatus comprises:

a first determining module, configured to determine, by a terminal, a time offset;
a second determining module, configured to determine, by the terminal, a target RO group based on the time offset; and
a transmission module, configured to perform, by the terminal, PRACH repetition transmission on the target RO group, wherein
the time offset is obtained by counting time-domain consecutive valid ROs that are at a same frequency location, that are associated with a same SSB, and on which preamble sets associated with the SSB are the same; or
the time offset is obtained by counting time-domain consecutive valid ROs that are at a same frequency location and that are associated with a same SSB, wherein preamble sets associated with the SSB on the valid ROs are not all the same, and when a part of preambles associated with one RO are not used for PRACH repetition transmission, none of preamble sets associated with the RO are capable of being used for PRACH repetition transmission.

27. A PRACH repetition transmission apparatus, wherein the apparatus comprises:

a third determining module, configured to determine, by a network-side device, a time offset;
a fourth determining module, configured to determine, by the network-side device, all available RO groups based on the time offset; and
a receiving module, configured to perform, by the network-side device, PRACH repetition reception on all the available RO groups, wherein the time offset is obtained by counting time-domain consecutive valid ROs that are at a same frequency location, that are associated with a same SSB, and on which preamble sets associated with the SSB are the same; or
the time offset is obtained by counting time-domain consecutive valid ROs that are at a same frequency location and that are associated with a same SSB, wherein preamble sets associated with the SSB on the valid ROs are not all the same, and when a part of preambles associated with one RO are not used for PRACH repetition transmission, none of preamble sets associated with the RO are capable of being used for PRACH repetition transmission.

28. A terminal, comprising a processor and a memory, wherein the memory stores a program or instructions capable of running on the processor, and the program or the instructions are executed by the processor to implement the steps of the PRACH repetition transmission method according to any one of claims 1 to 13.

29. A network-side device, comprising a processor and a memory, wherein the memory stores a program or instructions capable of running on the processor, and the program or instructions are executed by the processor to implement the steps of the PRACH repetition transmission method according to any one of claims 14 to 25.

30. A readable storage medium, wherein the readable storage medium stores a program or instructions, and the program or the instructions are executed by a processor to implement the steps of the PRACH repetition transmission method according to any one of claims 1 to 13 or the steps of the PRACH repetition transmission method according to any one of claims 14 to 25.

**FIG. 1a**

frequency (Frequency)

Rule 26,
24.10.2024

| RO#7 | Associated with SSB#3 |
| RO#6 | |
| RO#5 | Associated with SSB#2 |
| RO#4 | |
| RO#3 | Associated with SSB#1 |
| RO#2 | |
| RO#1 | Associated with SSB#0 |
| RO#0 | |

time (Time)

**FIG. 1b**

Rule 26,
24.10.2024

frequency (Frequency)

| SSB#2/3 RO#1 | SSB#6/7 RO#3 | SSB#2/3 RO#5 | SSB#6/7 RO#7 |
| SSB#0/1 RO#0 | SSB#4/5 RO#2 | SSB#0/1 RO#4 | SSB#4/5 RO#6 |

SSB to RO mapping (Mapping)

time (Time)

FIG. 1c

Rule 26,
24.10.2024

frequency (Frequency)

SSB#1   SSB#1        SSB#1   SSB#1

SSB#0   SSB#0  2nd RO group        SSB#0   SSB#0  4th RO group (group)

SSB#1   SSB#1  4th starting RO      SSB#1   SSB#1

2nd starting RO

SSB#0   SSB#0  1st RO group        SSB#0   SSB#0  3rd RO group

time (Time)

1st starting RO (Starting RO)        3rd starting RO

FIG. 1d

FIG. 1e

FIG. 1f

EP 4 783 717 A1

Rule 26,
24.10.2024

201

A terminal determines a time offset (time offset)

202

The terminal determines a target RO group (group) based on the time offset

203

The terminal performs PRACH repetition transmission on the target RO group

FIG. 2

301

A network-side device determines a time offset (time offset)

302

The network-side device determines all available RO groups (group) based on the time offset

303

The network-side device performs PRACH repetition reception on all the available RO groups

FIG. 3

FIG. 4a

EP 4 783 717 A1

Rule 26,
24.10.2024

FIG. 4b

EP 4 783 717 A1

Rule 26, 24.10.2024

FIG. 4c

EP 4 783 717 A1

FIG. 4d

Rule 26, 24.10.2024

PRACH repetition transmission
apparatus

— 501

First determining
module

— 502

Second determining
module

— 503

Transmission module

FIG. 5

PRACH repetition transmission
apparatus

— 601

Third determining
module

— 602

Fourth determining
module

— 603

Receiving module

FIG. 6

700

Communication device

701

Processor

702

Memory

FIG. 7

800

801 Radio frequency unit

802 Network module

810

809 Memory
Application program
Operating system

803 Audio output unit

804 Input unit
8041 Graphics processing unit
8042 Microphone

808 Interface unit

Processor

807 User input unit
8071 Touch panel
8072 Another input device

806 Display unit
8061 Display panel

Sensor 802

FIG. 8

900

Network-side device

91

94 Processor

95 Memory

Bus interface

Radio frequency apparatus 92

Baseband apparatus 93

Network interface

96

FIG. 9

1000

Network-side device

1001 Processor

1003 Memory

Bus interface

Network interface 1002

FIG. 10

## INTERNATIONAL SEARCH REPORT

| International application No. |
| --- |
| **PCT/CN2024/119354** |

### A. CLASSIFICATION OF SUBJECT MATTER

H04W74/08(2024.01)i

According to International Patent Classification (IPC) or to both national classification and IPC

### B. FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 物理随机接入信道, 重复, 传输, 机会, 时机, 集合, 时间, 时域, 偏移, 同步信号块, 有效, 计数, 前导码, PRACH, repeat, transmit, occasion, RO, group, time, domain, offset, SSB, effective, valid, count, preamble

### C. DOCUMENTS CONSIDERED TO BE RELEVANT

| Category* | Citation of document, with indication, where appropriate, of the relevant passages | Relevant to claim No. |
| --- | --- | --- |
| A | CN 115516991 A (INNOVATIVE TECHNOLOGY LAB CO., LTD.) 23 December 2022 (2022-12-23) <br> description, paragraphs 60-371, and figures 1-29 | 1-30 |
| A | CN 116134951 A (QUALCOMM INC.) 16 May 2023 (2023-05-16) <br> entire document | 1-30 |
| A | CN 116528385 A (SPREADTRUM SEMICONDUCTOR (NANJING) CO., LTD.) 01 August 2023 (2023-08-01) <br> entire document | 1-30 |
| A | US 2023189347 A1 (INTEL CORP.) 15 June 2023 (2023-06-15) <br> entire document | 1-30 |
| A | US 2023292371 A1 (TELEFONAKTIEBOLAGET LM ERICSSON (PUBL)) 14 September 2023 (2023-09-14) <br> entire document | 1-30 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 December 2024** | **20 December 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/119354**

| Patent document cited in search report | | | Publication date (day/month/year) | Patent family member(s) | | | Publication date (day/month/year) |
|---|---|---|---|---|---|---|---|
| CN | 115516991 | A | 23 December 2022 | KR | 20210133423 | A | 08 November 2021 |
| | | | | US | 2023085104 | A1 | 16 March 2023 |
| | | | | WO | 2021221381 | A1 | 04 November 2021 |
| | | | | EP | 4145942 | A1 | 08 March 2023 |
| | | | | EP | 4145942 | A4 | 17 April 2024 |
| CN | 116134951 | A | 16 May 2023 | None | | | |
| CN | 116528385 | A | 01 August 2023 | None | | | |
| US | 2023189347 | A1 | 15 June 2023 | None | | | |
| US | 2023292371 | A1 | 14 September 2023 | EP | 4193780 | A1 | 14 June 2023 |
| | | | | WO | 2022029304 | A1 | 10 February 2022 |

Form PCT/ISA/210 (patent family annex) (July 2022)

**REFERENCES CITED IN THE DESCRIPTION**

**Patent documents cited in the description**

- CN 202311214381
- CN 202311395595